# EUROPEAN PATENT APPLICATION

(11) **EP 4 726 887 A1**
(43) Date of publication of application: **15.04.2026**
(21) Application number: 24853213.7
(22) Date of filing: 08.04.2024
(51) Int. Cl.: H01M 50/244, H01M 50/24

(54) **BATTERY AND ELECTRIC DEVICE**

(30) Priority: 15.08.2023 CN 202311027215
(71) Applicant: Contemporary Amperex Technology Co., Limited, Ningde, Fujian 352100 (CN)
(72) Inventor: WU, Kai, Ningde, Fujian 352100 (CN); SHI, Si, Ningde, Fujian 352100 (CN); WANG, Yalei, Ningde, Fujian 352100 (CN); LIN, Baiqing, Ningde, Fujian 352100 (CN); ZHANG, Wenhui, Ningde, Fujian 352100 (CN); CHAN, Libing, Ningde, Fujian 352100 (CN); JIANG, Yuwei, Ningde, Fujian 352100 (CN)
(74) Representative: Ran, Handong
(86) International application number: PCT/CN2024/086662
(87) International publication number: WO 2025/035797

(57) **Abstract**

Provided in the present application are a battery and an electric device. The battery comprises battery cells, a first box and a second box, wherein the first box comprises a first sealing surface; the second box comprises a first surface and a second sealing surface, the first surface being used for bearing the battery cells; the first box and the second box jointly define a sealed space for accommodating the battery cells, the first sealing surface being fitted with the second sealing surface in order to seal the sealed space; and the first sealing surface intersects the first surface, and the second sealing surface intersects the first surface. Thus, in a direction which is parallel to the first surface and intersects the first sealing surface and the second sealing surface, the space occupied by the first sealing surface and the second sealing surface can be reduced, leading to an increase in the space utilization rate of the battery in the direction that is parallel to the first surface and intersects both the first sealing surface and the second sealing surface, enabling more battery cells to be accommodated or the volume of the battery to be reduced, thereby improving the volume energy density of the battery.

## Description

### CROSS-REFERENCE TO RELATED APPLICATIONS

This application claims priority to Chinese Patent Application No. 202311027215.8, filed on August 15, 2023 and entitled "BATTERY AND ELECTRIC DEVICE," which is incorporated herein by reference in its entirety.

### TECHNICAL FIELD

The present application relates to the field of battery technologies, and specifically, to a battery and an electric device.

### BACKGROUND

Batteries are widely used in fields such as electronic devices, vehicles, electric tools, unmanned aerial vehicles, and energy storage equipment. As application environments and conditions become increasingly complex, higher requirements are imposed on the energy density of batteries.

### SUMMARY

Embodiments of the present application provide a battery and an electric device to enhance the energy density of the battery.

According to a first aspect, embodiments of the present application provide a battery, the battery including a battery cell, a first housing, and a second housing. The first housing includes a first sealing surface. The second housing includes a first surface and a second sealing surface, where the first surface is configured to support the battery cell. The first housing and the second housing jointly enclose a closed space for accommodating the battery cell. The first sealing surface cooperates with the second sealing surface to seal the closed space. The first sealing surface intersecting with the first surface, and the second sealing surface intersecting with the first surface.

In the above technical solution, both the first sealing surface and the second sealing surface intersect with the first surface, meaning that the first sealing surface is not parallel to the first surface, and the second sealing surface is not parallel to the first surface. Under a same sealing width, as compared to the case where the first sealing surface and the second sealing surface are parallel to the first surface, the intersection of both the first sealing surface and the second sealing surface with the first surface can reduce the space occupied by the first sealing surface and the second sealing surface in a direction parallel to the first surface and intersecting with the first sealing surface and the second sealing surface, thereby improving the space utilization rate of the battery in the direction parallel to the first surface and intersecting with both the first sealing surface and the second sealing surface to accommodate more battery cells or reduce the volume of the battery, thus enhancing the volumetric energy density of the battery.

In some embodiments of the first aspect of the present application, at least one of the first sealing surface and the second sealing surface is perpendicular to the first surface.

In the above technical solution, at least one of the first sealing surface and the second sealing surface being perpendicular to the first surface can reduce the space occupied by the one of the first sealing surface and the second sealing surface, that is perpendicular to the first surface, in a direction parallel to the first surface and intersecting with the first sealing surface and the second sealing surface, allowing the one of the first sealing surface and the second sealing surface, that is perpendicular to the first surface, to fully utilize the space in the direction perpendicular to the first surface, facilitating an enhancement in the volumetric energy density of the battery.

In some embodiments of the first aspect of the present application, one of the first sealing surface and the second sealing surface is perpendicular to the first surface, and the other of the first sealing surface and the second sealing surface intersects non-perpendicularly with the first surface.

In the above technical solution, one of the first sealing surface and the second sealing surface is perpendicular to the first surface, and the other intersects non-perpendicularly with the first surface. This not only reduces the space occupied by the first sealing surface and the second sealing surface in a direction parallel to the first surface and intersecting with the first sealing surface and the second sealing surface, thereby improving the space utilization rate of the battery in the direction parallel to the first surface and intersecting with both the first sealing surface and the second sealing surface to accommodate more battery cells or reduce the volume of the battery, thus enhancing the volumetric energy density of the battery, but also fully utilizes the space in the direction perpendicular to the first surface, further enhancing the volumetric energy density of the battery.

In some embodiments of the first aspect of the present application, the one of the first sealing surface and the second sealing surface, that is perpendicular to the first surface, is located on a side of the other away from the closed space.

In the above technical solution, the one of the first sealing surface and the second sealing surface, that is perpendicular to the first surface, being located on a side of the other away from the closed space allows the one of the first sealing surface and the second sealing surface, that intersects non-perpendicularly with the first surface, to be disposed close to the closed space, fully utilizing the internal space of the housing formed by the first housing and the second housing, reducing the external dimensions of the battery, and thus facilitating an enhancement in the volumetric energy density of the battery.

In some embodiments of the first aspect of the present application, the second sealing surface is perpendicular to the first surface, and the second sealing surface is located on a side of the first sealing surface away from the closed space.

In the above technical solution, the second sealing surface being perpendicular to the first surface and located on a side of the first sealing surface away from the closed space not only allows the second sealing surface to utilize the space in the direction perpendicular to the first surface but also facilitates the assembly of the first housing and the second housing.

In some embodiments of the first aspect of the present application, the first housing includes a first end wall and a first side wall connected to each other, the first sealing surface being disposed on the first side wall; and the second housing includes a second end wall and a second side wall connected to each other, where the second end wall has the first surface and is disposed opposite to the first end wall along a first direction, the first direction being perpendicular to the first surface, and the second sealing surface is disposed on the second side wall.

In the above technical solution, the first housing includes a first end wall and a first side wall connected to each other, and the second housing includes a second end wall and a second side wall connected to each other. This facilitates the first housing and the second housing to enclose a closed space for accommodating the battery cell. In addition, the first sealing surface is disposed on the first side wall, and the second sealing surface is disposed on the second side wall. This allows the first sealing surface and the second sealing surface to have a relatively large area to achieve a good connection relationship and good sealing performance with the second sealing surface, making the battery highly reliable and also making the structure of the first housing and the second housing simple and easy to manufacture.

In some embodiments of the first aspect of the present application, the first sealing surface intersects non-perpendicularly with the first surface, and the first side wall and the first end wall are connected at an obtuse angle; or, the second sealing surface intersects non-perpendicularly with the first surface, and the second side wall and the second end wall are connected at an obtuse angle.

In the above technical solution, the first side wall and the first end wall being connected at an obtuse angle makes the first sealing surface intersects non-perpendicularly with the first surface, facilitating the filling of sealant or the placement of a sealing gasket in the space between the first sealing surface and the second sealing surface, thereby contributing to the formation of a reliable sealing relationship between the first housing and the second housing. The second side wall and the second end wall being connected at an obtuse angle makes the second sealing surface intersect non-perpendicularly with the first surface, facilitating the filling of sealant or the placement of a sealing gasket in the space between the first sealing surface and the second sealing surface, thereby contributing to the formation of a reliable sealing relationship between the first housing and the second housing.

In some embodiments of the first aspect of the present application, the first sealing surface and the second sealing surface together form a sealant accommodating space for accommodating sealant.

In the above technical solution, the first sealing surface and the second sealing surface together forming a sealant accommodating space for accommodating sealant allows the placement of sealant in the sealant accommodating space, which not only improves the sealing performance of the closed space but also enables the sealant to bond the first sealing surface and the second sealing surface, enhancing the connection stability between the first housing and the second housing. Bonding the first sealing surface and the second sealing surface with sealant eliminates the need for additional connecting pieces to connect the first housing and the second housing, reducing the steps in battery assembly and saving costs.

In some embodiments of the first aspect of the present application, in projection along the first direction, a projection of the sealant accommodating space at least partially overlaps with a projection of the battery cell.

In the above technical solution, in projection along the first direction, the projection of the sealant accommodating space at least partially overlapping with the projection of the battery cell allows the sealant accommodating space to occupy as little space as possible in the direction parallel to the first surface, fully utilizing the space in the direction perpendicular to the first surface. Under the condition of occupying as little space as possible in the direction parallel to the first surface, the sealant accommodating space has a relatively large sealing area to improve the sealing performance between the first sealing surface and the second sealing surface, making the battery highly reliable.

In some embodiments of the first aspect of the present application, the battery further includes a sealant blocking structure, the sealant blocking structure being disposed at the junction between the closed space and the sealant accommodating space.

In the above technical solution, the sealant blocking structure being disposed at the junction between the closed space and the sealant accommodating space can restrict the sealant in the sealant accommodating space from overflowing into the closed space or out of the closed space, reducing sealant waste and enabling the battery to have good sealing performance, thereby contributing to improving the sealing reliability of the battery.

In some embodiments of the first aspect of the present application, the sealant blocking structure is disposed on the second side wall.

In the above technical solution, the sealant blocking structure being disposed on the second side wall reduces the risk of interference between the sealant blocking structure and the battery cell.

In some embodiments of the first aspect of the present application, the sealant blocking structure is a first protrusion protruding from an inner surface of the second side wall, and the first housing is supported on the first protrusion.

In the above technical solution, the sealant blocking structure being a first protrusion protruding from the inner surface of the second side wall not only prevents the sealant in the sealant accommodating space from overflowing into the closed space but also supports the first housing, restricting the first housing from moving in a direction toward the second housing, thereby maintaining a relatively large size of the closed space.

In some embodiments of the first aspect of the present application, the sealant blocking structure is a groove disposed on the inner surface of the second side wall, and a portion of the first housing is located within the groove.

In the above technical solution, the sealant blocking structure being a groove disposed on the inner surface of the second side wall not only prevents the sealant in the sealant accommodating space from overflowing into the closed space but also reduces the weight of the second housing, and such a sealant blocking structure does not interfere with structures within the closed space.

In some embodiments of the first aspect of the present application, the second side wall is bent from an end of the second end wall along the first direction toward a direction away from the battery cell to form a recess, and the first side wall is inserted into the recess; or, the first side wall is bent from an end of the first end wall along the first direction toward a direction away from the battery cell to form a recess, and the second side wall is inserted into the recess; and the recess is configured to accommodate sealant.

In the above technical solution, the second side wall being bent from the end of the second end wall along the first direction toward a direction away from the battery cell to form a recess allows the formation of the recess without reducing the strength of the second side wall, and the first side wall being inserted into the recess can provide a limiting effect on the first side wall, improving the stability of the cooperation between the first housing and the second housing.

In some embodiments of the first aspect of the present application, in projection along the first direction, a projection of the recess at least partially overlaps with the projection of the battery cell.

In the above technical solution, in projection along the first direction, the projection of the recess at least partially overlapping with the projection of the battery cell allows the battery cell to fully utilize the closed space, thereby enhancing the energy density of the battery cell. The battery cell can also prevent the sealant in the recess from overflowing into the closed space.

In some embodiments of the first aspect of the present application, both the first sealing surface and the second sealing surface are perpendicular to the first surface.

In the above technical solution, both the first sealing surface and the second sealing surface are perpendicular to the first surface. As compared to the case where the first sealing surface and the second sealing surface are parallel to the first surface, both the first sealing surface and the second sealing surface being perpendicular to the first surface minimizes the space occupied by the first sealing surface and the second sealing surface in a direction parallel to the first surface and intersecting with the first sealing surface and the second sealing surface, allowing the first sealing surface and the second sealing surface to fully utilize the space in the direction perpendicular to the first surface, thereby improving the space utilization rate of the battery in the direction parallel to the first surface and intersecting with both the first sealing surface and the second sealing surface to accommodate more battery cells or reduce the volume of the battery, thus enhancing the volumetric energy density of the battery.

In some embodiments of the first aspect of the present application, the first housing includes a first end wall and a first side wall connected to each other, the first sealing surface being disposed on the first side wall; and the second housing includes a second end wall and a second side wall connected to each other, where the second end wall has the first surface and is disposed opposite to the first end wall along a first direction, the first direction being perpendicular to the first surface, and the second sealing surface is disposed on the second side wall.

In the above technical solution, the first housing includes a first end wall and a first side wall connected to each other, and the second housing includes a second end wall and a second side wall connected to each other. This facilitates the first housing and the second housing to enclose a closed space for accommodating the battery cell. In addition, the first sealing surface is disposed on the first side wall, and the second sealing surface is disposed on the second side wall. This allows the first sealing surface and the second sealing surface to have a relatively large area to achieve a good connection relationship and good sealing performance with the second sealing surface, making the battery highly reliable and also making the structure of the first housing and the second housing simple and easy to manufacture.

In some embodiments of the first aspect of the present application, sealant is filled between the first sealing surface and the second sealing surface.

In the above technical solution, sealant being filled between the first sealing surface and the second sealing surface not only improves the sealing performance of the closed space but also enables the sealant to bond the first sealing surface and the second sealing surface, enhancing the connection stability between the first housing and the second housing. Bonding the first sealing surface and the second sealing surface with sealant eliminates the need for additional connecting pieces to connect the first housing and the second housing, reducing the steps in battery assembly and saving costs.

In some embodiments of the first aspect of the present application, in projection along a second direction, a projection of the sealant at least partially overlaps with the projection of the battery cell, the second direction being parallel to the first surface and intersecting with the first side wall.

In the above technical solution, in projection along the second direction, the projection of the sealant at least partially overlapping with the projection of the battery cell reduces the space occupied by the sealant in other directions intersecting with the second direction, allowing the sealant to fully utilize the space of the battery in the second direction, thereby contributing to enhancing the energy density of the battery.

In some embodiments of the first aspect of the present application, the battery further includes a sealant blocking structure, the sealant blocking structure being disposed in the closed space at a position close to the first sealing surface and the second sealing surface.

In the above technical solution, the sealant blocking structure being disposed in the closed space at a position close to the first sealing surface and the second sealing surface can restrict the sealant in the sealant accommodating space from overflowing into the closed space, reducing sealant waste and enabling the battery to have good sealing performance, thereby contributing to improving the sealing reliability of the battery.

In some embodiments of the first aspect of the present application, the sealant blocking structure is disposed on the first surface.

In the above technical solution, the sealant blocking structure being disposed on the first surface facilitates the placement of the sealant blocking structure.

In some embodiments of the first aspect of the present application, the sealant blocking structure is a second protrusion protruding from the first surface, and a portion of the first housing is located between the second side wall and the second protrusion.

In the above technical solution, the sealant blocking structure being a second protrusion protruding from the first surface, with a portion of the first housing located between the second side wall and the second protrusion, not only prevents the sealant between the first sealing surface and the second sealing surface from overflowing into the closed space but also restricts the first housing from deforming in a direction away from the second side wall, thereby maintaining a relatively large size of the closed space and reducing the risk of interference with structures within the closed space due to deformation of the first housing in a direction away from the second side wall.

In some embodiments of the first aspect of the present application, the first housing includes a first end wall and a first side wall connected to each other, the first sealing surface being disposed on the first side wall, and the second housing includes a second end wall, where the first end wall and the second end wall are disposed opposite each other along a first direction, the first direction being perpendicular to the first surface; the second end wall is provided with an accommodating groove, the second sealing surface is disposed on a wall of the accommodating groove, the first side wall is inserted into the accommodating groove, and the accommodating groove is filled with sealant.

In the above technical solution, the first side wall being inserted into the accommodating groove not only provides a limiting effect on the first side wall but also restricts the first side wall from deforming toward or away from the closed space. The accommodating groove being filled with sealant not only improves sealing performance but also enables the sealant to connect the first housing and the second housing within the accommodating groove, eliminating the need for additional connecting pieces to connect the first housing and the second housing, reducing the steps in battery assembly and saving costs.

In some embodiments of the first aspect of the present application, in projection along the first direction, a projection of the accommodating groove at least partially overlaps with the projection of the battery cell.

In the above technical solution, in projection along the first direction, the projection of the accommodating groove at least partially overlapping with the projection of the battery cell allows the battery cell to fully utilize the closed space, thereby enhancing the energy density of the battery cell. The battery cell can also prevent the sealant in the accommodating groove from overflowing into the closed space.

According to a second aspect, embodiments of the present application provide an electric device, including the battery provided in any of the above embodiments.

In the above technical solution, the electric device employs the battery with higher energy density provided above, thus having longer endurance and meeting more power demands.

### BRIEF DESCRIPTION OF DRAWINGS

To more clearly illustrate the technical solutions of the embodiments of the present application, the drawings required for use in the embodiments will be briefly introduced below. It should be understood that the following drawings only show certain embodiments of the present application and therefore should not be regarded as limiting the scope. For those of ordinary skill in the art, other related drawings can be obtained based on these drawings without creative efforts.
FIG. 1 is a schematic diagram of a vehicle according to some embodiments of the present application.
FIG. 2 is an exploded view of a battery according to some embodiments of the present application.
FIG. 3 is a schematic diagram of a first housing and a second housing in a closed state according to some embodiments of the present application.
FIG. 4 is a schematic diagram of sealant filled between the first sealing surface and the second sealing surface in FIG. 3.
FIG. 5 is a schematic diagram of a first housing and a second housing in a closed state according to some other embodiments of the present application.
FIG. 6 is a schematic diagram of sealant filled between the first sealing surface and the second sealing surface in FIG. 5.
FIG. 7 is a schematic diagram of a first housing and a second housing in a closed state according to some further embodiments of the present application.
FIG. 8 is a schematic diagram of sealant filled between the first sealing surface and the second sealing surface in FIG. 7.
FIG. 9 is a cross-sectional view of a battery according to some embodiments of the present application.
FIG. 10 is a cross-sectional view of a battery according to some other embodiments of the present application.
FIG. 11 is a schematic diagram of a first housing and a second housing in a closed state according to yet other embodiments of the present application.
FIG. 12 is a cross-sectional view of a battery according to additional further embodiments of the present application.
FIG. 13 is an enlarged view of position D1 in FIG. 11.
FIG. 14 is a cross-sectional view of a battery according to other additional embodiments of the present application.
FIG. 15 is an enlarged view of position D2 in FIG. 14.
FIG. 16 is a schematic diagram of a first housing and a second housing in a closed state according to additional further embodiments of the present application.
FIG. 17 is a schematic diagram of sealant filled between the first sealing surface and the second sealing surface in FIG. 16.
FIG. 18 is a schematic diagram of a first housing and a second housing in a closed state according to further other embodiments of the present application.
FIG. 19 is a schematic diagram of sealant filled between the first sealing surface and the second sealing surface in FIG. 18.
FIG. 20 is a schematic diagram of a first housing and a second housing in a closed state according to yet additional embodiments of the present application.
FIG. 21 is a schematic diagram of sealant filled between the first sealing surface and the second sealing surface in FIG. 20.
FIG. 22 is a cross-sectional view of a battery according to some further embodiments of the present application.
FIG. 23 is a schematic diagram of a first housing and a second housing in a closed state according to still other embodiments of the present application.
FIG. 24 is a schematic diagram of a first housing and a second housing in a closed state according to yet additional embodiments of the present application.

Description of reference signs: 1000. vehicle; 100. battery; 10. battery cell; 20. first housing; 21. first sealing surface; 22. first end wall; 23. first side wall; 24. third side wall; 30. second housing; 31. first surface; 32. second sealing surface; 33. second end wall; 34. second side wall; 35. fourth side wall; 40. sealant; 50. sealant blocking structure; 51. first protrusion; 511. first abutting surface; 52. groove; 53. second protrusion; 54. accommodating groove; 200. controller; 300. motor; X. first direction; Y. second direction; Z. third direction; A. closed space; B. sealant accommodating space; and C. recess.

### DESCRIPTION OF EMBODIMENTS

To make the objectives, technical solutions, and advantages of the embodiments of the present application clearer, the technical solutions in the embodiments of the present application will be described clearly and completely below with reference to the drawings in the embodiments of the present application. Obviously, the described embodiments are part of the embodiments of the present application, not all of them. Generally, the components in some embodiments of the present application as described and illustrated in the accompanying drawings herein can be arranged and designed in a variety of configurations.

Therefore, the following detailed description of some embodiments of the present application as provided in the accompanying drawings is not intended to limit the protection scope of the present application but merely to represent selected embodiments of the present application. All other embodiments obtained by persons of ordinary skill in the art based on some embodiments of the present application without creative efforts shall fall within the protection scope of the present application.

It should be noted that in the absence of conflicts, some embodiments and features in some embodiments in the present application may be combined with each other.

It should be noted that similar reference numerals and letters indicate similar items in the following drawings, and therefore once an item is defined in one drawing, it does not need to be further defined or explained in the subsequent drawings.

In the description of the embodiments of the present application, it should be noted that the indicated orientation or positional relationship is based on the orientation or positional relationship shown in the drawings, or the orientation or positional relationship that the product of the present application is typically placed in during use, or the orientation or positional relationship commonly understood by those skilled in the art, and is only for the convenience of describing the present application and simplifying the description, rather than indicating or implying that the referred device or element must have a specific orientation, be constructed and operated in a specific orientation, and therefore should not be construed as limiting the present application. In addition, the terms "first," "second," "third," and the like are merely intended for distinguishing purposes and shall not be understood as any indication or implication of relative importance.

Currently, from the perspective of market development, the application of traction batteries is becoming more extensive. Traction batteries are not only used in energy storage power systems such as hydraulic, thermal, wind, and solar power stations but are also widely applied in electric vehicles such as electric bicycles, electric motorcycles, and electric cars, as well as in military equipment, aerospace, and other fields. With the continuous expansion of the application fields of traction batteries, the market demand for traction batteries is also expanding.

The battery mentioned in the embodiments of the present application refers to a single physical module that includes one or more battery cells to provide higher voltage and capacity. For example, the battery mentioned in the present application may include a battery module, a battery pack, or the like. The battery generally includes a housing for encapsulating one or more battery cells. The housing can reduce the risk of liquids or other foreign objects affecting the charging or discharging of the battery cells.

In the present application, "plurality" refers to two or more (including two).

In the embodiments of the present application, the battery cell may be a secondary battery, and the secondary battery refers to a battery cell that can be recharged to activate active materials for continuous use after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, or a lead storage battery. This is not limited in the embodiments of the present application.

The battery cell may include an electrode assembly. The electrode assembly may include a positive electrode, a negative electrode, and a separator. During charging and discharging of the battery cell, active ions (such as lithium ions) intercalate and deintercalate back and forth between the positive electrode and the negative electrode. The separator is disposed between the positive electrode and the negative electrode, which can reduce the risk of a short circuit between the positive and negative electrodes while allowing active ions to pass through.

In some embodiments, the battery cell may further include an electrolyte, and the electrolyte plays a role in conducting ions between the positive and negative electrodes. The electrolyte may be in a liquid state, a gel state, or a solid state. The liquid electrolyte may include an electrolyte salt and a solvent. The solid electrolyte may include a polymer solid electrolyte, an inorganic solid electrolyte, or a composite solid electrolyte.

In some embodiments, the electrode assembly may have a wound structure. The positive electrode plate and the negative electrode plate are wound into a wound structure.

In some embodiments, the shape of the electrode assembly may be cylindrical.

In some embodiments, the electrode assembly is provided with tabs, and the tabs can conduct current from the electrode assembly. The tabs include a positive tab and a negative tab.

In some embodiments, the battery cell may include a casing. The casing is configured to encapsulate the electrode assembly, the electrolyte, and other components. The casing may be a steel casing, an aluminum casing, a plastic casing (for example, polypropylene), a composite metal casing (for example, a copper-aluminum composite casing), or an aluminum-plastic film.

As an example, the battery cell may be a cylindrical battery cell, a prismatic battery cell, a pouch battery cell, or a battery cell of other shapes.

The battery mentioned in the embodiments of the present application refers to a single physical module that includes one or more battery cells to provide higher voltage and capacity.

In some embodiments, the battery may be a battery module, and when there are a plurality of battery cells, the plurality of battery cells are arranged and fastened to form a battery module.

In some embodiments, the battery may be a battery pack, the battery pack including a housing and battery cells, and the battery cells or battery modules being accommodated in the housing. The housing may include a first housing and a second housing, the first housing and the second housing being connected to jointly enclose a closed space. The second housing has a first surface, the first surface being configured to support the battery cells, and the battery cells are disposed within the closed space to reduce the risk of liquids or other foreign objects affecting the charging or discharging of the battery cells.

In some embodiments, the housing may be used as part of the chassis structure of a vehicle. For example, part of the housing may become at least part of the chassis of a vehicle, or part of the housing may become at least parts of a cross beam and longitudinal beam of a vehicle.

In some embodiments, the battery may be an energy storage apparatus. The energy storage apparatus includes an energy storage container, an energy storage electric cabinet, and the like.

The housing of the battery includes a first housing and a second housing, where the first housing and the second housing interlock with each other to form a closed space for accommodating the battery cells, and the first housing and the second housing are hermetically sealed to each other to seal the enclosed space. In related technologies, the edges of both the first housing and the second housing are provided with a flange structure protruding outward from the battery (typically protruding in a direction parallel to the surface of the housing supporting the battery cells), where the flange structure of the first housing forms a sealing surface, the flange structure of the second housing forms a sealing surface, and both sealing surfaces are parallel to a direction parallel to a surface of the housing supporting the battery cells. The sealing interface formed by the sealing surface of the flange structure of the first housing and the sealing surface of the flange structure of the second housing are also parallel to the direction parallel to the surface of the housing supporting the battery cells. However, the protruding flange structures occupy space in the direction parallel to the first surface, resulting in low battery space utilization rate and affecting the volumetric energy density of the battery.

Based on the above considerations, to mitigate the problem of low battery space utilization rate and affected battery energy density due to the additional space occupied by flange structures formed at the edges of the first housing and the second housing to achieve sealing, embodiments of the present application provide a battery. The battery includes a battery cell, a first housing, and a second housing. The first housing includes a first sealing surface, and the second housing includes a first surface and a second sealing surface. The first surface is configured to support the battery cell. The first housing and the second housing jointly enclose a closed space for accommodating the battery cell. The first sealing surface cooperates with the second sealing surface to seal the closed space. The first sealing surface intersects with the first surface, and the second sealing surface intersects with the first surface.

Both the first sealing surface and the second sealing surface intersecting with the first surface means that the first sealing surface is not parallel to the first surface and the second sealing surface is not parallel to the first surface. Under a same sealing width, as compared to the case where the first sealing surface and the second sealing surface are parallel to the first surface, the intersection of both the first sealing surface and the second sealing surface with the first surface can reduce the space occupied by the first sealing surface and the second sealing surface in a direction parallel to the first surface and intersecting with the first sealing surface and the second sealing surface, thereby improving the space utilization rate of the battery in the direction parallel to the first surface and intersecting with both the first sealing surface and the second sealing surface to accommodate more battery cells or reduce the volume of the battery, thus enhancing the volumetric energy density of the battery.

The battery disclosed in the embodiments of the present application may be used, without limitation, in battery cabinets, containerized energy storage devices, and the like. The energy storage device may include a plurality of batteries disclosed in the present application.

The battery disclosed in the embodiments of the present application may be used, without limitation, in electric devices such as vehicles, ships, or aircraft. The battery disclosed in this application may be used to constitute a power supply system for the electric device.

Embodiments of the present application provide an electric device using a battery as a power source, the electric device may include but is not limited to a mobile phone, a tablet computer, a laptop computer, an electric toy, an electric tool, an electric bicycle, an electric motorcycle, an electric vehicle, a ship, a heavy truck, a bus, or a spacecraft. The electric toy may include a fixed or mobile electric toy, such as a game console, an electric car toy, an electric ship toy, an electric airplane toy, and the like, and the spacecraft may include an airplane, a rocket, a space shuttle, and a spaceship.

For ease of description, the electric apparatus of an embodiment of the present application being a vehicle is used as an example for the description of the following embodiments.

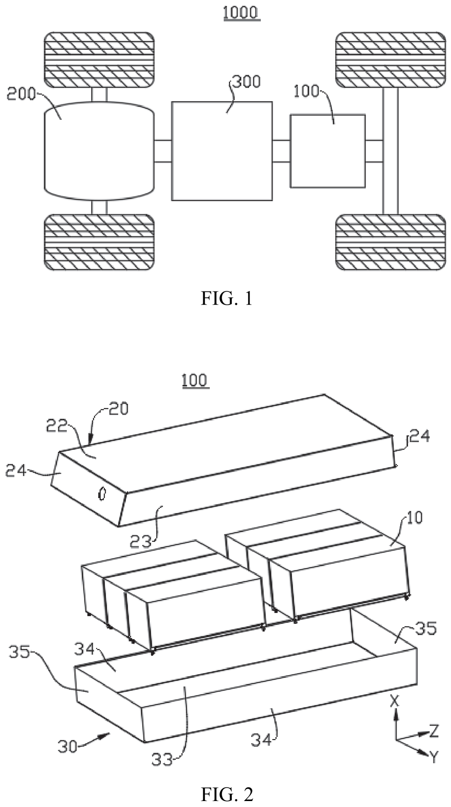

Referring to FIG. 1, FIG. 1 is a schematic diagram of a vehicle 1000 according to some embodiments of the present application. The vehicle 1000 may be a fuel vehicle, a gas vehicle, or a new energy vehicle, and the new energy vehicle may be a pure electric vehicle, a hybrid vehicle, or an extended-range vehicle. The type of the vehicle 1000 may be a sedan, an SUV, a heavy truck, or a bus. A battery 100 is disposed inside the vehicle 1000, and the battery 100 may be disposed at the bottom, front, or rear of the vehicle 1000. The battery 100 may be used for powering the vehicle 1000, for example, the battery 100 may serve as an operational power source for the vehicle 1000, used for the circuit system of the vehicle 1000, such as for the starting, navigation, and operational power needs during driving of the vehicle 1000.

The vehicle 1000 may further include a controller 200 and a motor 300, where the controller 200 is configured to control the battery 100 to supply power to the motor 300, for example, to satisfy the power needs of starting, navigation, and driving of the vehicle 1000.

In some embodiments of the present application, the battery 100 can be used not only as the operational power source for the vehicle 1000 but also as a driving power source for the vehicle 1000, replacing or partially replacing fossil fuel or natural gas to provide driving traction for the vehicle 1000.

As shown in FIG. 2, FIG. 3, and FIG. 4, some embodiments of the present application provide a battery 100. The battery 100 includes a battery cell 10, a first housing 20, and a second housing 30. The first housing 20 includes a first sealing surface 21. The second housing 30 includes a first surface 31 and a second sealing surface 32, where the first surface 31 is configured to support the battery cell 10. The first housing 20 and the second housing 30 jointly enclose a closed space A for accommodating the battery cell 10. The first sealing surface 21 cooperates with the second sealing surface 32 to seal the closed space A. The first sealing surface 21 intersects with the first surface 31, and the second sealing surface 32 intersects with the first surface 31.

The first housing 20 and the second housing 30 together form the housing of the battery 100. The battery cell 10 is accommodated in the closed space A defined by the first housing 20 and the second housing 30. The battery 100 may include one or more battery cells 10. In embodiments where the battery 100 includes a plurality of battery cells 10, the plurality of battery cells 10 may be connected in series, in parallel, or series-parallel, where being connected in series-parallel means a combination of series and parallel connections of the plurality of battery cells 10.

The second housing 30 has a first surface 31 configured to support the battery cell 10, and the first surface 31 being configured to support the battery cell 10 can be understood as the first surface 31 being the surface of the second housing 30 on which the battery cell 10 is placed or the surface of the second housing 30 that bears the main weight of the battery cell 10. The second housing 30 can be regarded as the main part supporting the battery cell 10. For example, the second housing 30 may serve as the lower housing of the battery 100, and the surface of the bottom wall of the lower housing facing the battery cell 10 may be the first surface 31. The first housing 20 can be regarded as the upper housing of the battery 100. The first housing 20 and the second housing 30 are closed together along a first direction X to define the closed space A.

In some embodiments, the first housing 20 and the second housing 30 may be made of aluminum, aluminum alloy, stainless steel, or plastic, respectively. The first housing 20 and the second housing 30 may be made of a same material or different materials.

In some embodiments, the second housing 30, as the main component supporting the battery cell 10, may be made of a material with high structural strength, such as aluminum alloy, steel, or other materials with high structural strength, and the first housing 20 may be made of a material with lower density, such as plastic, to minimize the impact of the mass of the first housing 20 on the mass energy density of the battery 100 and to facilitate reducing the weight of the battery 100.

The first housing 20 and the second housing 30 are configured to provide a closed space A for the battery cell 10. In some embodiments, the first housing 20 and the second housing 30 are closed together to define the closed space A for accommodating the battery cell 10. Of course, the connection between the first housing 20 and the second housing 30 may be sealed by a sealing member (not shown in the figures), and the sealing member may be a sealing ring, a sealing gasket, sealant 40, or the like.

The first housing 20 and the second housing 30 may be of various shapes, such as a cuboid or a cylinder. The first housing 20 may be a hollow structure with an opening on one side forming an accommodating cavity for accommodating the battery cell 10, and the second housing 30 may also be a hollow structure with an opening on one side forming an accommodating cavity for accommodating the battery cell 10, with the opening side of the first housing 20 being engaged with the opening side of the second housing 30 to form a housing with a closed space A. Alternatively, the first housing 20 may be a hollow structure with an opening on one side forming an accommodating cavity for accommodating the battery cell 10, and the second housing 30 may be a plate-like structure, with the second housing 30 being engaged with the opening side of the first housing 20 to form a housing with a closed space A. Alternatively, the second housing 30 may be a hollow structure with an opening on one side forming an accommodating cavity for accommodating the battery cell 10, and the first housing 20 may be a plate-like structure, with the first housing 20 being engaged with the opening side of the second housing 30 to form a housing with a closed space A.

The first sealing surface 21 is a surface of the first housing 20 configured to form a sealed connection with the second housing 30. The second sealing surface 32 is a surface of the second housing 30 configured to cooperate with the first sealing surface 21 of the first housing 20 to form a sealing interface for sealing the closed space A. The first sealing surface 21 and the second sealing surface 32 cooperate to achieve sealing of the closed space A, reducing the risk of interference from the external environment with the battery cell 10 within the closed space A, enabling the battery 100 to operate normally and improving the reliability of the battery 100.

There are various ways to form a sealed connection between the first sealing surface 21 and the second sealing surface 32, such as welding the first housing 20 and the second housing 30 at the first sealing surface 21 and the second sealing surface 32 to achieve a sealed connection; or, clamping a sealing gasket between the first sealing surface 21 and the second sealing surface 32 and locking the first housing 20 and the second housing 30 with a connecting piece to stably clamp the sealing gasket between the first sealing surface 21 and the second sealing surface 32, thereby achieving sealing; or, filling sealant 40 between the first sealing surface 21 and the second sealing surface 32, with the sealant 40 bonding the first sealing surface 21 and the second sealing surface 32 to achieve sealing.

"The first sealing surface 21 intersecting with the first surface 31" does not only mean that the first sealing surface 21 and the first surface 31 directly intersect, but may also mean that the extension surface of the first sealing surface 21 intersects with the extension surface of the first surface 31, or the plane in which the first sealing surface 21 lies intersects with the plane in which the first surface 31 lies. The first sealing surface 21 intersecting with the first surface 31 means that the first sealing surface 21 and the first surface 31 are not parallel. The first sealing surface 21 and the first surface 31 may intersect perpendicularly or non-perpendicularly. Non-perpendicular intersection of the first sealing surface 21 and the first surface 31 means that the first sealing surface 21 and the first surface 31 may intersect at an obtuse angle or an acute angle.

"The second sealing surface 32 intersecting with the first surface 31" does not only mean that the second sealing surface 32 and the first surface 31 directly intersect, but may also mean that the extension surface of the second sealing surface 32 intersects with the extension surface of the first surface 31, or the plane in which the second sealing surface 32 lies intersects with the plane in which the first surface 31 lies. The second sealing surface 32 intersecting with the first surface 31 means that the second sealing surface 32 and the first surface 31 are not parallel. The second sealing surface 32 and the first surface 31 may intersect perpendicularly or non-perpendicularly. Non-perpendicular intersection of the second sealing surface 32 and the first surface 31 means that the second sealing surface 32 and the first surface 31 may intersect at an obtuse angle or an acute angle.

Both the first sealing surface 21 and the second sealing surface 32 intersecting with the first surface 31 means that the first sealing surface 21 is not parallel to the first surface 31 and the second sealing surface 32 is not parallel to the first surface 31. Under a same sealing width, as compared to the case where the first sealing surface 21 and the second sealing surface 32 are parallel to the first surface 31, the intersection of both the first sealing surface 21 and the second sealing surface 32 with the first surface 31 can reduce the space occupied by the first sealing surface 21 and the second sealing surface 32 in a direction parallel to the first surface 31 and intersecting with the first sealing surface 21 and the second sealing surface 32, thereby improving the space utilization rate of the battery 100 in the direction parallel to the first surface 31 and intersecting with both the first sealing surface 21 and the second sealing surface 32 to accommodate more battery cells 10 or reduce the volume of the battery 100, thus enhancing the volumetric energy density of the battery 100.

In some embodiments, at least one of the first sealing surface 21 and the second sealing surface 32 is perpendicular to the first surface 31.

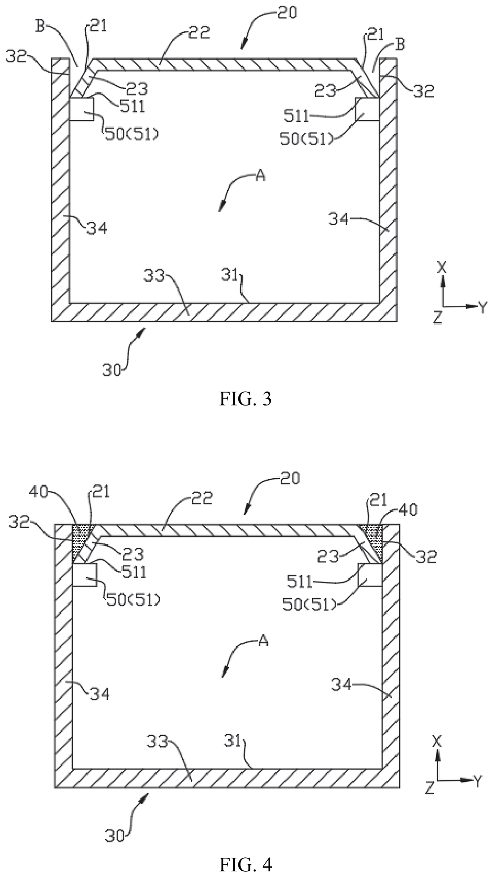

As shown in FIG. 3 to FIG. 6, one of the first sealing surface 21 and the second sealing surface 32 may intersect perpendicularly with the first surface 31, and the other may intersect non-perpendicularly with the first surface 31. It may be that the first sealing surface 21 intersects perpendicularly with the first surface 31, and the second sealing surface 32 intersects non-perpendicularly with the first surface 31. Alternatively, it may be that the first sealing surface 21 intersects non-perpendicularly with the first surface 31, and the second sealing surface 32 intersects perpendicularly with the first surface 31.

Both the first sealing surface 21 and the second sealing surface 32 may intersect perpendicularly with the first surface 31.

At least one of the first sealing surface 21 and the second sealing surface 32 being perpendicular to the first surface 31 can reduce the space occupied by the one of the first sealing surface 21 and the second sealing surface 32, that is perpendicular to the first surface 31, in a direction parallel to the first surface 31 and intersecting with the first sealing surface 21 and the second sealing surface 32, allowing the one of the first sealing surface 21 and the second sealing surface 32, that is perpendicular to the first surface 31, to fully utilize the space in the direction perpendicular to the first surface 31, thereby contributing to improving the volumetric energy density of the battery 100.

As shown in FIG. 3 to FIG. 6, in some embodiments, one of the first sealing surface 21 and the second sealing surface 32 is perpendicular to the first surface 31, and the other of the first sealing surface 21 and the second sealing surface 32 intersects non-perpendicularly with the first surface 31.

In some embodiments, the first sealing surface 21 may intersect perpendicularly with the first surface 31, and the second sealing surface 32 may intersect non-perpendicularly with the first surface 31.

In some other embodiments, the second sealing surface 32 may intersect perpendicularly with the first surface 31, and the first sealing surface 21 may intersect non-perpendicularly with the first surface 31.

One of the first sealing surface 21 and the second sealing surface 32 is perpendicular to the first surface 31, and the other intersects non-perpendicularly with the first surface 31, which not only reduces the space occupied by the first sealing surface 21 and the second sealing surface 32 in a direction parallel to the first surface 31 and intersecting with the first sealing surface 21 and the second sealing surface 32, thereby improving the space utilization rate of the battery 100 in the direction parallel to the first surface 31 and intersecting with both the first sealing surface 21 and the second sealing surface 32 to accommodate more battery cells 10 or reduce the volume of the battery 100, thus enhancing the volumetric energy density of the battery 100, but also fully utilizes the space in the direction perpendicular to the first surface 31, further enhancing the volumetric energy density of the battery 100.

In embodiments where one of the first sealing surface 21 and the second sealing surface 32 intersects perpendicularly with the first surface 31, and the other intersects non-perpendicularly with the first surface 31, as shown in FIG. 3 to FIG. 6, the one of the first sealing surface 21 and the second sealing surface 32, that is perpendicular to the first surface 31, is located on a side of the other away from the closed space A.

If the first sealing surface 21 intersects perpendicularly with the first surface 31, and the second sealing surface 32 intersects non-perpendicularly with the first surface 31, the first sealing surface 21 is farther from the closed space A relative to the second sealing surface 32, or the first sealing surface 21 is located on the outer side of the second sealing surface 32.

If the second sealing surface 32 intersects perpendicularly with the first surface 31, and the first sealing surface 21 intersects non-perpendicularly with the first surface 31, the second sealing surface 32 is farther from the closed space A relative to the first sealing surface 21, or the second sealing surface 32 is located on the outer side of the first sealing surface 21.

The one of the first sealing surface 21 and the second sealing surface 32, that is perpendicular to the first surface 31, is located on a side of the other away from the closed space A, which allows the one of the first sealing surface 21 and the second sealing surface 32, that intersects non-perpendicularly with the first surface 31, to be disposed close to the closed space A, fully utilizing the internal space of the housing formed by the first housing 20 and the second housing 30, reducing the external dimensions of the battery 100, and thus facilitating an enhancement in the volumetric energy density of the battery 100.

In some embodiments, the second sealing surface 32 is perpendicular to the first surface 31, and the second sealing surface 32 is located on a side of the first sealing surface 21 away from the closed space A.

The second sealing surface 32 intersects perpendicularly with the first surface 31, and the second sealing surface 32 is not perpendicular to the first surface 31.

The second sealing surface 32 being perpendicular to the first surface 31 and located on a side of the first sealing surface 21 away from the closed space A not only allows the second sealing surface 32 to utilize the space in the direction perpendicular to the first surface 31 but also facilitates the assembly of the first housing 20 and the second housing 30.

Depending on the different structures of the first housing 20 and the second housing 30, the positions on which the first sealing surface 21 and the second sealing surface 32 are disposed also vary.

As shown in FIG. 3 to FIG. 6, in some embodiments, the first housing 20 includes a first end wall 22 and a first side wall 23 connected to each other, the first sealing surface 21 being disposed on the first side wall 23; and the second housing 30 includes a second end wall 33 and a second side wall 34 connected to each other, where the second end wall 33 has the first surface 31 and is disposed opposite to the first end wall 22 along a first direction X, the first direction X being perpendicular to the first surface 31, and the second sealing surface 32 is disposed on the second side wall 34.

The first side wall 23 is connected to an end of the first end wall 22 along a second direction Y, and the first side wall 23 extends from the first end wall 22 in a direction approaching the second housing 30.

The second direction Y is a direction parallel to the first surface 31, the first direction X is perpendicular to the second direction Y, and both the first sealing surface 21 and the second sealing surface 32 may intersect with the second direction Y. In some embodiments, the second direction Y may be the width direction of the battery 100, and both the first sealing surface 21 and the second sealing surface 32 intersect with the first surface 31, meaning that both the first sealing surface 21 and the second sealing surface 32 intersect with the second direction Y, or it can be said that both the first sealing surface 21 and the second sealing surface 32 intersect with the width direction of the battery 100. Under a same sealing width, as compared to the case where the first sealing surface 21 and the second sealing surface 32 are parallel to the first surface 31 (the first sealing surface 21 and the second sealing surface 32 are parallel to the second direction Y), the intersection of both the first sealing surface 21 and the second sealing surface 32 with the first surface 31 can reduce the space occupied by the first sealing surface 21 and the second sealing surface 32 in the second direction Y, thereby improving the space utilization rate of the battery 100 in the second direction Y to accommodate more battery cells 10 or reduce the volume of the battery 100, thus enhancing the volumetric energy density of the battery 100. The smaller size of the battery 100 in the width direction can also facilitate reducing the size of the electric device powered by the battery 100 in the width direction of the battery 100. For example, if the electric device is a heavy truck powered by the battery 100 according to the embodiments of the present application, the size of the heavy truck in the width direction of the battery 100 can be made smaller. Generally, the width direction of the battery 100 is substantially consistent with the width direction of the heavy truck, meaning that the heavy truck can have a smaller size in its width direction.

The first housing 20 and the second housing 30 can be regarded as being closed together in the height direction of the battery 100 to define the closed space A. The height direction of the battery 100 is substantially consistent with the first direction X. In some embodiments, the height direction of the battery 100 may be substantially consistent with the height direction of the heavy truck.

The first end wall 22 and the first side wall 23 may be integrally formed. The first end wall 22 and the first side wall 23 may be separately provided and then connected to form the first housing 20, and the first end wall 22 and the first side wall 23 are connected by methods including but not limited to welding, adhesive bonding, and screw fastening.

The first sealing surface 21 may be at least a portion of the surface of the first side wall 23 facing the closed space A or facing away from the closed space A in the second direction Y.

The second side wall 34 is connected to an end of the second end wall 33 corresponding to the first side wall 23 along the second direction Y, and the second side wall 34 extends from the second end wall 33 in a direction approaching the first housing 20.

The second end wall 33 and the second side wall 34 may be integrally formed. The second end wall 33 and the second side wall 34 may be separately provided and then connected to form the second housing 30, and the second end wall 33 and the second side wall 34 are connected by methods including but not limited to welding, adhesive bonding, and screw fastening.

The surface of the second end wall 33 facing the first end wall 22 in the first direction X is the first surface 31. The second sealing surface 32 may be at least a portion of the surface of the second side wall 34 facing the closed space A or facing away from the closed space A in the second direction Y.

The first housing 20 includes a first end wall 22 and a first side wall 23 connected to each other, and the second housing 30 includes a second end wall 33 and a second side wall 34 connected to each other. This facilitate the first housing 20 and the second housing 30 to enclose a closed space A for accommodating the battery cell 10. In addition, the first sealing surface 21 is disposed on the first side wall 23, and the second sealing surface 32 is disposed on the second side wall 34. This allows the first sealing surface 21 and the second sealing surface 32 to have a relatively large area to achieve a good connection relationship and good sealing performance with the second sealing surface 32, making the battery 100 highly reliable and also making the structure of the first housing 20 and the second housing 30 simple and easy to manufacture.

As shown in FIG. 3 to FIG. 6, in some embodiments, the first housing 20 includes two first side walls 23, the two first side walls 23 being respectively connected to two ends of the first end wall 22 along the second direction Y. The second housing 30 includes two second side walls 34, the two second side walls 34 being respectively connected to two ends of the second end wall 33 along the second direction Y. Each first side wall 23 is provided with a first sealing surface 21, and each second side wall 34 is provided with a second sealing surface 32. The first side walls 23 and the second side walls 34 are arranged in a one-to-one correspondence, and the first sealing surfaces 21 and the second sealing surfaces 32 are arranged in a one-to-one correspondence. The first sealing surface 21 of each first side wall 23 cooperates with the second sealing surface 32 of the corresponding second side wall 34 to seal the closed space A in the second direction Y.

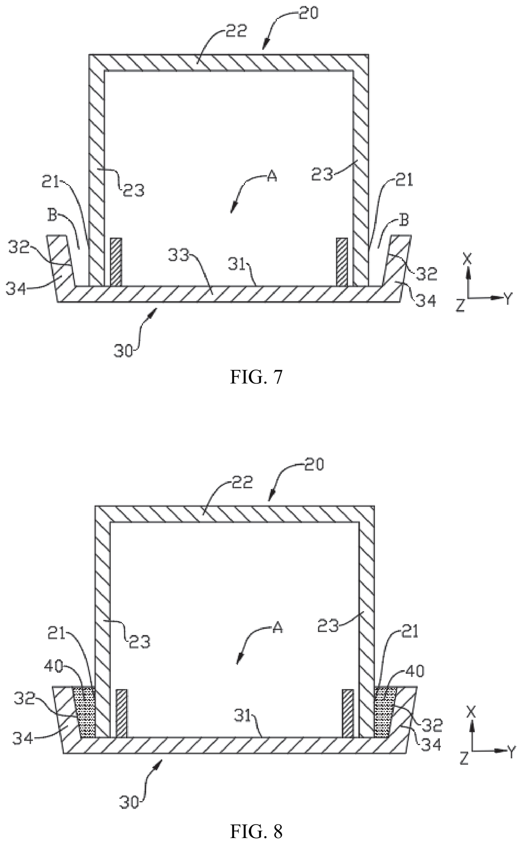

As shown in FIG. 3 to FIG. 6, in some embodiments, the first sealing surface 21 intersects non-perpendicularly with the first surface 31, and the first side wall 23 and the first end wall 22 are connected at an obtuse angle; or, as shown in FIG. 7 and FIG. 8, the second sealing surface 32 intersects non-perpendicularly with the first surface 31, and the second side wall 34 and the second end wall 33 are connected at an obtuse angle.

As shown in FIG. 3 to FIG. 6, the first side wall 23 and the first end wall 22 are connected at an obtuse angle, and the first sealing surface 21 intersects with the first surface 31 at an acute angle. In embodiments where the first housing 20 includes two first side walls 23, both first side walls 23 are connected to the first end wall 22 at an obtuse angle, and the two first side walls 23 are arranged in a splayed configuration.

As shown in FIG. 7 and FIG. 8, the second side wall 34 and the second end wall 33 are connected at an obtuse angle, and the second sealing surface 32 intersects with the first surface 31 at an obtuse angle. In embodiments where the second housing 30 includes two second side walls 34, both second side walls 34 are connected to the second end wall 33 at an obtuse angle, and the two second side walls 34 are arranged in an inverted splayed configuration.

The first side wall 23 and the first end wall 22 being connected at an obtuse angle makes the first sealing surface 21 intersect non-perpendicularly with the first surface 31, facilitating the filling of sealant 40 or the placement of a sealing gasket in the space between the first sealing surface 21 and the second sealing surface 32, thereby contributing to the formation of a reliable sealing relationship between the first housing 20 and the second housing 30. The second side wall 34 and the second end wall 33 being connected at an obtuse angle makes the second sealing surface 32 intersect non-perpendicularly with the first surface 3 l, facilitating the filling of sealant 40 or the placement of a sealing gasket in the space between the first sealing surface 21 and the second sealing surface 32, thereby contributing to the formation of a reliable sealing relationship between the first housing 20 and the second housing 30.

As shown in FIG. 3 to FIG. 6, in embodiments where the first end wall 22 and the first side wall 23 are arranged at an obtuse angle, the second end wall 33 and the second side wall 34 may be arranged perpendicularly. The second side wall 34 is located on the outer side of the first side wall 23, meaning that the second side wall 34 is located on a side of the first side wall 23 away from the closed space A. At least a portion of the surface of the first side wall 23 facing the second side wall 34 forms the first sealing surface 21. The surface of the first side wall 23 facing the second side wall 34 is also the surface of the first side wall 23 facing away from the closed space A. At least a portion of the surface of the second side wall 34 facing the first side wall 23 forms the second sealing surface 32. The surface of the second side wall 34 facing the first side wall 23 is also the surface of the second side wall 34 facing the closed space A.

As shown in FIG. 3 to FIG. 8, in some embodiments, the first sealing surface 21 and the second sealing surface 32 together form a sealant accommodating space B for accommodating sealant 40.

In embodiments where the first side wall 23 and the first end wall 22 are arranged at an obtuse angle, and the second side wall 34 and the second end wall 33 are arranged perpendicularly, the cross-section of the sealant accommodating space B formed by the first sealing surface 21 and the second sealing surface 32 may have a triangular structure, forming a relatively large opening at the end of the sealant accommodating space B away from the second end wall 33 to facilitate filling the sealant accommodating space B with sealant accommodating space B.

The sealant accommodating space B may be filled with sealant 40. The sealant 40 may be a sealing material with certain adhesive properties and can also provide functions such as leakage prevention, waterproofing, vibration resistance, and heat insulation within the sealant accommodating space B. The sealant 40 may be silicone sealant 40, polyurethane sealant 40, polysulfide sealant 40, acrylic sealant 40, anaerobic sealant 40, butyl sealant 40, neoprene sealant 40, PVC sealant 40, asphalt sealant 40, or the like.

The first sealing surface 21 and the second sealing surface 32 together forming a sealant accommodating space B for accommodating sealant 40 allows the placement of sealant 40 in the sealant accommodating space B, which not only improves the sealing performance of the closed space A but also enables the sealant 40 to bond the first sealing surface 21 and the second sealing surface 32, enhancing the connection stability between the first housing 20 and the second housing 30. Bonding the first sealing surface 21 and the second sealing surface 32 with sealant 40 eliminates the need for additional connecting pieces to connect the first housing 20 and the second housing 30, reducing the steps in battery 100 assembly and saving costs.

In some other embodiments, the space formed between the first sealing surface 21 and the second sealing surface 32 may also be configured to accommodate sealing members such as a sealing gasket or a sealing ring (not shown in the figures). The sealing member is clamped between the first sealing surface 21 and the second sealing surface 32. The sealing member may be in abutment or adhesive bonding with the first sealing surface 21, and the sealing member may be in abutment or adhesive bonding with the second sealing surface 32.

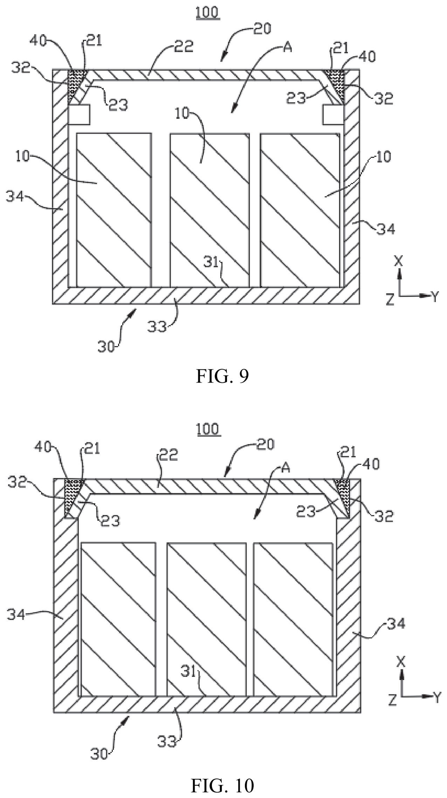

As shown in FIG. 9 to FIG. 10, in some embodiments, in projection along the first direction X, a projection of the sealant accommodating space B at least partially overlaps with a projection of the battery cell 10.

In embodiments where the first side wall 23 and the first end wall 22 are arranged at an obtuse angle, and the second side wall 34 is perpendicular to the second end wall 33, at least a portion of the sealant accommodating space B may extend to a side of the battery cell 10 away from the first surface 31, and in projection along the first direction X, a projection of the portion of the sealant accommodating space B extending to the side of the battery cell 10 away from the first surface 31 at least partially overlaps with the projection of the battery cell 10.

The sealant accommodating space B may have a portion extending to the side of the battery cell 10 away from the first surface 31, or the sealant accommodating space B may be entirely located on a side of the battery cell 10 away from the first surface 31.

In projection along the first direction X, the projection of the sealant accommodating space B at least partially overlapping with the projection of the battery cell 10 allows the sealant accommodating space B to occupy as little space as possible in the direction parallel to the first surface 31, fully utilizing the space in the direction perpendicular to the first surface 31. Under the condition of occupying as little space as possible in the direction parallel to the first surface 31, the sealant accommodating space B has a relatively large sealing area to improve the sealing performance between the first sealing surface 21 and the second sealing surface 32, making the battery 100 highly reliable.

As shown in FIG. 3 to FIG. 6, in some embodiments, the battery 100 further includes a sealant blocking structure 50, the sealant blocking structure 50 being disposed at the junction between the closed space A and the sealant accommodating space B.

The sealant blocking structure 50 is configured to block the sealant 40 filled in the sealant accommodating space B to reduce the risk of the sealant 40 in the sealant accommodating space B overflowing into the closed space A.

The sealant blocking structure 50 being disposed at the junction between the closed space A and the sealant accommodating space B can also be understood as the sealant blocking structure 50 being disposed at the boundary between the closed space A and the sealant accommodating space B.

The junction between the closed space A and the sealant accommodating space B being provided with the sealant blocking structure 50 allows the sealant blocking structure 50 to restrict the sealant 40 in the sealant accommodating space B from overflowing into the closed space A, reducing sealant waste and enabling the battery 100 to have good sealing performance, thereby contributing to improving the sealing reliability of the battery 100.

As shown in FIG. 3 to FIG. 6, in embodiments where the first end wall 22 and the first side wall 23 are arranged at an obtuse angle, and the second end wall 33 is perpendicular to the second side wall 34, the sealant blocking structure 50 is disposed on the second side wall 34.

The sealant blocking structure 50 being disposed on the second side wall 34 can support the first housing 20 along the direction of gravity, restricting the first housing 20 from moving in a direction toward the second end wall 33, thereby maintaining a closed space A of a certain size formed by the first housing 20 and the second housing 30.

The sealant blocking structure 50 can support the first housing 20 by supporting an end of the first side wall 23 away from the first end wall 22.

As shown in FIG. 3 and FIG. 4, the sealant blocking structure 50 is a first protrusion 51 protruding from an inner surface of the second side wall 34, and the first housing 20 is supported on the first protrusion 51.

The inner surface of the second side wall 34 is the surface of the second side wall 34 facing the closed space A. The sealant blocking structure 50 is the first protrusion 51 disposed on the inner surface of the second side wall 34. The first protrusion 51 protrudes along the second direction Y from the first inner surface and extends into the closed space A.

The first protrusion 51 and the second side wall 34 may be integrally formed to facilitate the manufacturing and molding of the second housing 30. The first protrusion 51 and the second side wall 34 may be separately provided, and then the first protrusion 51 is connected to the second side wall 34. The first protrusion 51 and the second side wall 34 are connected by various methods, for example, welding, adhesive bonding, and screw fastening.

Along the first direction X, the first protrusion 51 has a first abutting surface 511 located on a side away from the second end wall 33. An end of the first side wall 23 away from the first end wall 22 abuts against the first abutting surface 511. In embodiments where the second housing 30 includes two second side walls 34, the first inner surfaces of both second side walls 34 are provided with first protrusions 51, and the two first side walls 23 of the first housing 20, at one end away from the first end wall 22, respectively abut against the first abutting surfaces 511 of the two first protrusions 51. The first abutting surfaces 511 of the two first protrusions 51 may be located in the same plane, so that the ends of the two first side walls 23 of the first housing 20 away from the first end wall 22 can be at the same height in the first direction X.

The first protrusion 51 not only serves to block the sealant 40 in the sealant accommodating space B from entering the closed space A but also restricts the first housing 20 from moving in a direction toward the second end wall 33, thereby maintaining a size of the closed space A sufficient to accommodate the battery cell 10.

Therefore, the sealant blocking structure 50 being a first protrusion 51 protruding from the inner surface of the second side wall 34 not only prevents the sealant 40 in the sealant accommodating space B from overflowing into the closed space A but also supports the first housing 20, restricting the first housing 20 from moving in a direction toward the second housing 30, thereby maintaining a relatively large size of the closed space A.

In some embodiments, along the first direction X, a distance between the first abutting surface 511 and an end of the second side wall 34 away from the second end wall 33 is less than a distance between the first abutting surface 511 and the first surface 31, so that the first housing 20 can be relatively close to the end of the second side wall 34 away from the second end wall 33, facilitating the assembly of the first housing 20 and the second housing 30. The second side wall 34 of such a second housing 30 has a relatively large dimension along the first direction X, and the second housing 30 may be referred to as a high-walled structure or a high vertical riser structure. The dimension of the first side wall 23 of the first housing 20 can be set smaller, facilitating the assembly of the first housing 20 and the second housing 30.

As shown in FIG. 3 and FIG. 4, in some embodiments, a gap may be formed between an end of the first protrusion 51 facing the second end wall 33 and the second end wall 33, reducing the occupation of the closed space A by the first protrusion 51 and reducing the risk of interference between the first protrusion 51 and structures within the closed space A.

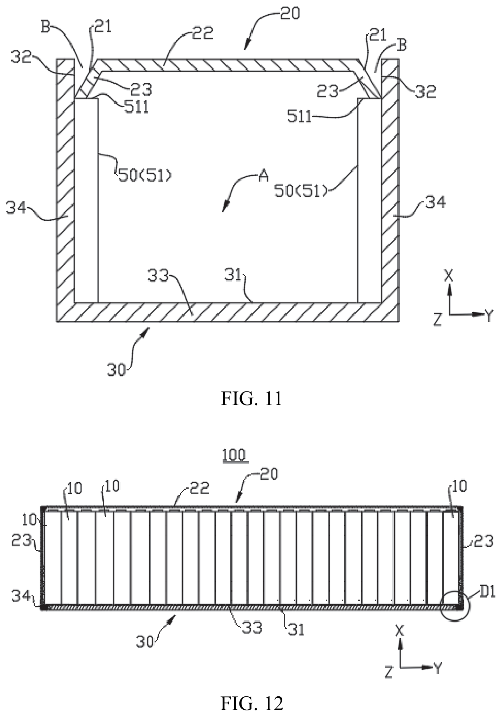

As shown in FIG. 11, in some other embodiments, an end of the first protrusion 51 facing the second end wall 33 may extend to the second end wall 33, and the second end wall 33 can support the first protrusion 51, so that the first end wall 22 and the first protrusion 51 can together support the first housing 20, reducing the risk of the first protrusion 51 detaching from the second side wall 34 due to bearing the weight of the first housing 20.

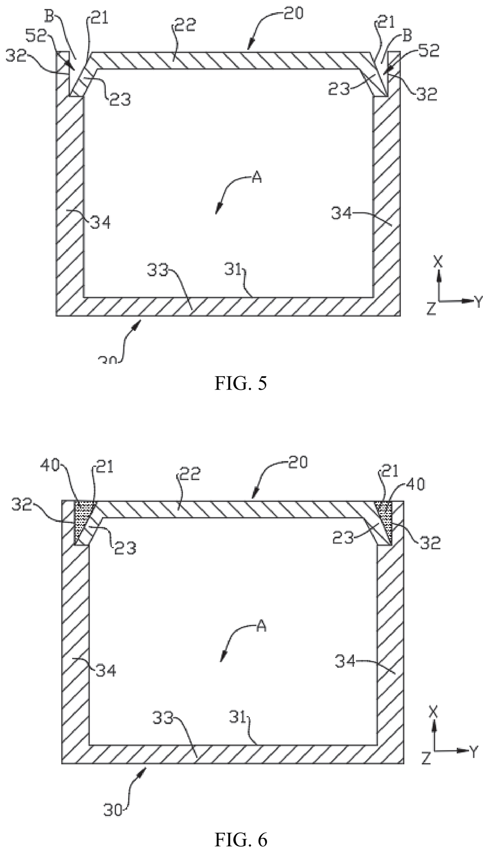

As shown in FIG. 5 and FIG. 6, in some other embodiments, the sealant blocking structure 50 is a groove 52 disposed on the inner surface of the second side wall 34, and a portion of the first housing 20 is located within the groove 52.

The sealant blocking structure 50 may be a groove 52 disposed on the first inner surface, at least a portion of the first housing 20 is inserted into the groove 52, and the wall surface of the groove 52 supports the first housing 20.

In embodiments where the first housing 20 includes a first end wall 22 and a first side wall 23, the first side wall 23 may be inserted into the groove 52, and the wall surface of the groove 52 abuts against an end of the first side wall 23 away from the first end wall 22.

In some embodiments, along the first direction X, the groove 52 may extend to an end surface of the second side wall 34 away from the second end wall 33, such that an L-shaped groove 52 is formed in the second side wall 34. Both the side wall and the bottom surface of the groove 52 may abut against the end of the first side wall 23 away from the first end wall 22. The surface of the groove 52 facing the sealing surface can either abut against the first side wall 23 or form the second sealing surface 32. The side surface of the groove 52 may be the wall surface of the groove 52 parallel to the first direction X, and the bottom surface of the groove 52 may be the wall surface of the groove 52 intersecting with the first direction X.

In embodiments where the second housing 30 includes two second side walls 34, the first inner surfaces of both second side walls 34 are provided with grooves 52, and the two first side walls 23 of the first housing 20, at one end away from the first end wall 22, respectively abut against the wall surfaces of the two grooves 52. The bottom surfaces of the two grooves 52 may be located in the same plane, so that the ends of the two first side walls 23 of the first housing 20 away from the first end wall 22 can be at the same height in the first direction X.

The groove 52 not only serves to block the sealant 40 in the sealant accommodating space B from entering the closed space A but also restricts the first housing 20 from moving in a direction toward the second end wall 33 through the bottom surface of the groove 52, thereby maintaining a size of the closed space A sufficient to accommodate the battery cell 10.

The sealant blocking structure 50 being a groove 52 disposed on the inner surface of the second side wall 34 not only prevents the sealant 40 in the sealant accommodating space B from overflowing into the closed space A but also reduces the weight of the second housing 30, and such a sealant blocking structure 50 does not interfere with structures within the closed space A.

In some embodiments, along the first direction X, a distance between the bottom surface of the groove 52 and an end of the second side wall 34 away from the second end wall 33 is less than a distance between the bottom surface of the groove 52 and the first surface 31, so that the first housing 20 can be relatively close to the opening side of the second housing 30, facilitating the assembly of the first housing 20 and the second housing 30. The second side wall 34 of such a second housing 30 has a relatively large dimension along the first direction X, and the second housing 30 may be referred to as a high-walled structure or a high vertical riser housing, and the dimension of the first side wall 23 of the first housing 20 can be set smaller, facilitating the assembly of the first housing 20 and the second housing 30.

The sealant blocking structure 50 being disposed on the second side wall 34 reduces the risk of interference between the sealant blocking structure 50 and the battery cell 10.

As shown in FIG. 12 to FIG. 15, in some embodiments, the second side wall 34 is bent from an end of the second end wall 33 along the first direction X toward a direction away from the battery cell 10 to form a recess C, and the first side wall 23 is inserted into the recess C; or, the first side wall 23 is bent from an end of the first end wall 22 along the first direction X toward a direction away from the battery cell 10 to form a recess C, and the second side wall 34 is inserted into the recess C; and the recess C is configured to accommodate sealant 40.

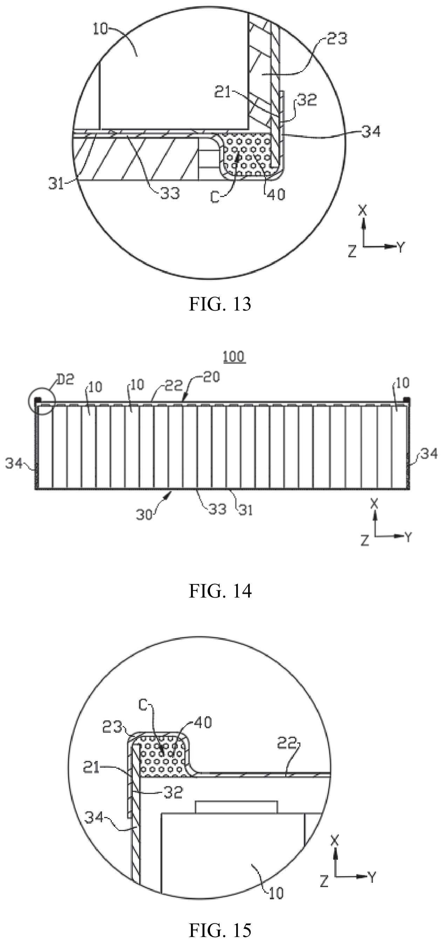

As shown in FIG. 12 and FIG. 13, the second side wall 34 is bent from an end of the second end wall 33, forming a recess C with an opening facing the first end wall 22 along the first direction X. After bending, a portion of the inner side surface of the second side wall 34 forms a wall surface of the recess C, and a portion of the inner side surface of the second side wall 34 may form the second sealing surface 32. In such embodiments, the inner side surface of the second side wall 34 refers to a surface of the second side wall 34 facing the battery cell 10 in the second direction Y before bending. After the second side wall 34 is bent to form the recess C, a surface of the bottom wall of the recess C facing away from the closed space A in the first direction X may protrude beyond a surface of the second end wall 33 facing away from the closed space A. Forming the recess C by bending has a minimal impact on the strength of the second housing 30.

The first side wall 23 is inserted into the recess C, and at least a portion of the surface of the first side wall 23 facing away from the closed space A in the second direction Y forms the first sealing surface 21. The first sealing surface 21 and the second sealing surface 32 may fit closely together, and the sealant 40 is accommodated in the recess C and located on a side of the first side wall 23 facing the closed space A. The sealant 40 can connect a surface of the first side wall 23 facing the closed space A and a wall surface of the recess C opposite to the surface of the first side wall 23 facing the closed space A, so that the first sealing surface 21, the second sealing surface 32, and the sealant 40 jointly seal the closed space A.

Of course, in some other embodiments, a space for accommodating sealant 40 may also be formed between the first sealing surface 21 and the second sealing surface 32. The sealant 40 may be accommodated in the recess C and entirely located between the first sealing surface 21 and the second sealing surface 32, or the sealant 40 may be accommodated in the recess C and partially located between the first sealing surface 21 and the second sealing surface 32. The sealant 40 can connect the first sealing surface 21 and the second sealing surface 32, and with another portion located on a side of the first side wall 23 facing the closed space A, the sealant 40 can connect the surface of the first side wall 23 facing the closed space A and the wall surface of the recess C opposite to the surface of the first side wall 23 facing the closed space A, not only improving sealing performance but also enhancing the stability of the first side wall 23 within the recess C. In embodiments where a space for accommodating sealant 40 may also be formed between the first sealing surface 21 and the second sealing surface 32, and the sealant 40 is accommodated in the recess C and entirely located between the first sealing surface 21 and the second sealing surface 32, the surface of the first side wall 23 facing the closed space A and the wall surface of the recess C opposite to the surface of the first side wall 23 facing the closed space A may fit closely together or may form a gap.

In embodiments where the second housing 30 includes two second side walls 34, both second side walls 34 may be bent to form recesses C, with the recesses C of the two second side walls 34 respectively located at two ends of the second end wall 33 along the second direction Y. The two first side walls 23 may be respectively inserted into the recesses C formed by bending the two second side walls 34.

As shown in FIG. 14 and FIG. 15, the first side wall 23 is bent from an end of the first end wall 22, forming a recess C with an opening facing the second end wall 33 along the first direction X. After the first side wall 23 is bent, a portion of the inner side surface of the first side wall 23 forms a wall surface of the recess C, and a portion of the inner side surface of the first side wall 23 may form the first sealing surface 21. In such embodiments, the inner side surface of the first side wall 23 refers to a surface of the first side wall 23 facing the battery cell 10 in the second direction Y before bending. After the first side wall 23 is bent to form the recess C, a surface of the bottom wall of the recess C facing away from the closed space A in the first direction X may protrude beyond a surface of the first end wall 22 facing away from the closed space A.

Forming the recess C by bending has a minimal impact on the strength of the first housing 20.

The second side wall 34 is inserted into the recess C, and at least a portion of the surface of the second side wall 34 facing away from the closed space A in the second direction Y forms the second sealing surface 32. The first sealing surface 21 and the second sealing surface 32 may fit closely together, and the sealant 40 is accommodated in the recess C and located on a side of the second side wall 34 facing the closed space A. The sealant 40 can connect the surface of the second side wall 34 facing the closed space A and the wall surface of the recess C opposite to the surface of the second side wall 34 facing the closed space A, so that the first sealing surface 21, the second sealing surface 32, and the sealant 40 jointly seal the closed space A.

Of course, in some other embodiments, a space for accommodating sealant 40 may also be formed between the first sealing surface 21 and the second sealing surface 32. The sealant 40 may be accommodated in the recess C and entirely located between the first sealing surface 21 and the second sealing surface 32, or the sealant 40 may be accommodated in the recess C and partially located between the first sealing surface 21 and the second sealing surface 32. The sealant 40 can connect the first sealing surface 21 and the second sealing surface 32, and with another portion located on a side of the second side wall 34 facing the closed space A, the sealant 40 can connect the surface of the second side wall 34 facing the closed space A and the wall surface of the recess C opposite to the surface of the second side wall 34 facing the closed space A, not only improving sealing performance but also enhancing the stability of the first side wall 23 within the recess C. In embodiments where a space for accommodating sealant 40 may also be formed between the first sealing surface 21 and the second sealing surface 32, and the sealant 40 is accommodated in the recess C and entirely located between the first sealing surface 21 and the second sealing surface 32, the surface of the second side wall 34 facing the closed space A and the wall surface of the recess C opposite to the surface of the second side wall 34 facing the closed space A may fit closely together or may form a gap.

In embodiments where the first housing 20 includes two first side walls 23, both first side walls 23 may be bent to form recesses C, with the recesses C of the two first side walls 23 respectively located at two ends of the first end wall 22 along the second direction Y. The two second side walls 34 may be respectively inserted into the recesses C formed by bending the two first side walls 23.

The second side wall 34 being bent from an end of the second end wall 33 along the first direction X toward a direction away from the battery cell 10 to form a recess allows the formation of the recess without reducing the strength of the second side wall 34, and the first side wall 23 being inserted into the recess can provide a limiting effect on the first side wall 23, improving the stability of the cooperation between the first housing 20 and the second housing 30.

In some embodiments, in projection along the first direction X, a projection of the recess C at least partially overlaps with a projection of the battery cell 10.

Along the second direction Y, at least a portion of the battery cell 10 extends to the opening of the recess C. In embodiments where the recesses C are disposed at two ends of the second end wall 33 arranged oppositely along the second direction Y, the battery cell 10 extends along the second direction Y to the opening of the recess C, and in projection along the first direction X, a portion of the projection of the battery cell 10 is located within the recess C.

In projection along the first direction X, the projection of the recess C at least partially overlapping with the projection of the battery cell 10 allows the battery cell 10 to fully utilize the closed space A, thereby enhancing the energy density of the battery cell 10. The battery cell 10 can also prevent the sealant 40 in the recess C from overflowing into the closed space A.

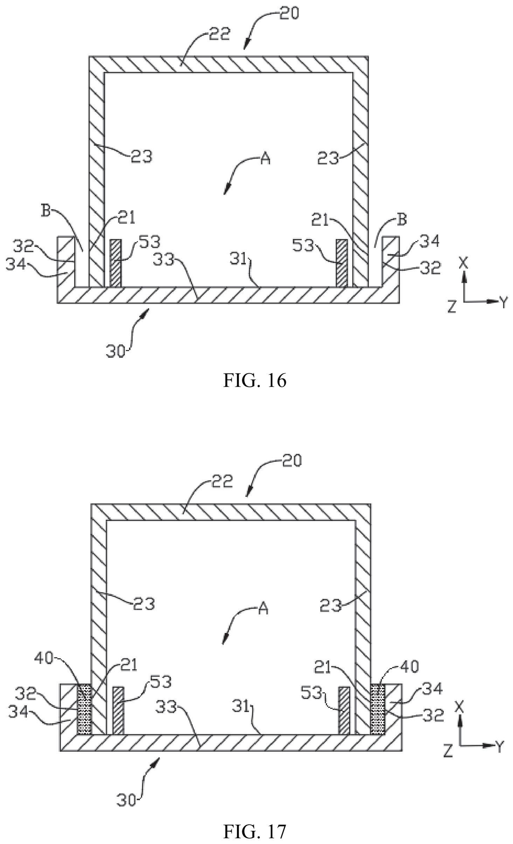

As shown in FIG. 16 to FIG. 24, in some embodiments, both the first sealing surface 21 and the second sealing surface 32 are perpendicular to the first surface 31.

The first sealing surface 21 and the second sealing surface 32 are arranged oppositely and parallel in a direction parallel to the first surface 31.

Both the first sealing surface 21 and the second sealing surface 32 are perpendicular to the first surface 31. As compared to the case where the first sealing surface 21 and the second sealing surface 32 are parallel to the first surface 31, both the first sealing surface 21 and the second sealing surface 32 being perpendicular to the first surface 31 minimizes the space occupied by the first sealing surface 21 and the second sealing surface 32 in a direction parallel to the first surface 31 and intersecting with the first sealing surface 21 and the second sealing surface 32, allowing the first sealing surface 21 and the second sealing surface 32 to fully utilize the space in the direction perpendicular to the first surface 31, thereby improving the space utilization rate of the battery 100 in the direction parallel to the first surface 31 and intersecting with both the first sealing surface 21 and the second sealing surface 32 to accommodate more battery cells 10 or reduce the volume of the battery 100, thus enhancing the volumetric energy density of the battery 100.

As shown in FIG. 16 to FIG. 22, in embodiments where both the first sealing surface 21 and the second sealing surface 32 are perpendicular to the first surface 31, the first housing 20 includes a first end wall 22 and a first side wall 23 connected to each other, the first sealing surface 21 being disposed on the first side wall 23; and the second housing 30 includes a second end wall 33 and a second side wall 34 connected to each other, where the second end wall 33 has the first surface 31 and being disposed opposite to the first end wall 22 along a first direction X, the first direction X being perpendicular to the first surface 31, and the second sealing surface 32 is disposed on the second side wall 34.

The first side wall 23 is connected to an end of the first end wall 22 along a second direction Y, and the first side wall 23 extends from the first end wall 22 along the first direction X toward the second housing 30.

The second direction Y is a direction parallel to the first surface 31, and the first direction X is perpendicular to the second direction Y. The second direction Y may be the width direction of the battery 100, and both the first sealing surface 21 and the second sealing surface 32 are perpendicular to the first surface 31, meaning that both the first sealing surface 21 and the second sealing surface 32 are perpendicular to the second direction Y, or it can be said that both the first sealing surface 21 and the second sealing surface 32 are perpendicular to the width direction of the battery 100. Under a same sealing width, as compared to the case where the first sealing surface 21 and the second sealing surface 32 are parallel to the first surface 31 (the first sealing surface 21 and the second sealing surface 32 are parallel to the second direction Y), the perpendicularity of both the first sealing surface 21 and the second sealing surface 32 to the first surface 31 can reduce the space occupied by the first sealing surface 21 and the second sealing surface 32 in the second direction Y, thereby improving the space utilization rate of the battery 100 in the second direction Y to accommodate more battery cells 10 or reduce the volume of the battery 100, thus enhancing the volumetric energy density of the battery 100. The smaller size of the battery 100 in the width direction can also facilitate reducing the size of the electric device powered by the battery 100 in the width direction of the battery 100. For example, if the electric device is a heavy truck powered by the battery 100 according to the embodiments of the present application, the size of the heavy truck in the width direction of the battery 100 can be made smaller. Generally, the width direction of the battery 100 is substantially consistent with the width direction of the heavy truck, meaning that the heavy truck can have a smaller size in its width direction.

The first end wall 22 and the first side wall 23 are arranged perpendicularly, so that the first sealing surface 21 is perpendicular to the first surface 31. The second end wall 33 and the second side wall 34 are arranged perpendicularly, so that the second sealing surface 32 is perpendicular to the first surface 31. The first side wall 23 and the second side wall 34 are arranged oppositely and parallel along the second direction Y.

At least a portion of the surface of the first side wall 23 facing or facing away from the closed space A in the second direction Y forms the first sealing surface 21. At least a portion of the surface of the second side wall 34 facing or facing away from the closed space A in the second direction Y forms the second sealing surface 32.

The first housing 20 may include two first side walls 23, the two first side walls 23 being respectively connected to two ends of the first end wall 22 along the second direction Y and both perpendicular to the first end wall 22. The second housing 30 may include two second side walls 34, the two second side walls 34 being respectively connected to two ends of the second end wall 33 along the second direction Y and both perpendicular to the second end wall 33.

In some embodiments, in the second direction Y, the second side wall 34 is located on a side of the first side wall 23 away from the closed space A, at least a portion of the surface of the first side wall 23 facing away from the closed space A forms the first sealing surface 21, and at least a portion of the surface of the second side wall 34 facing the closed space A forms the second sealing surface 32.

The first housing 20 includes a first end wall 22 and a first side wall 23 connected to each other, and the second housing 30 includes a second end wall 33 and a second side wall 34 connected to each other. This facilitates the first housing 20 and the second housing 30 to enclose a closed space A for accommodating the battery cell 10. In addition, the first sealing surface 21 is disposed on the first side wall 23, and the second sealing surface 32 is disposed on the second side wall 34. This allow the first sealing surface 21 and the second sealing surface 32 to have a relatively large area to achieve a good connection relationship and good sealing performance with the second sealing surface 32, making the battery 100 highly reliable and also making the structure of the first housing 20 and the second housing 30 simple and easy to manufacture.

As shown in FIG. 16 and FIG. 17, in some embodiments, sealant 40 is filled between the first sealing surface 21 and the second sealing surface 32.

The first sealing surface 21 and the second sealing surface 32 are arranged oppositely and spaced apart in the second direction Y, forming a sealant accommodating space B between the first sealing surface 21 and the second sealing surface 32. In embodiments where the first side wall 23 and the first end wall 22 are arranged perpendicularly, and the second side wall 34 and the second end wall 33 are arranged perpendicularly, the sealant accommodating space B between the first sealing surface 21 and the second sealing surface 32 may be an equidistant space. The sealant accommodating space B between the first sealing surface 21 and the second sealing surface 32 may alternatively be a variable-distance space with the spacing gradually increasing or decreasing along a third direction Z.

Sealant 40 being filled between the first sealing surface 21 and the second sealing surface 32 not only improves the sealing performance of the closed space A but also enables the sealant 40 to bond the first sealing surface 21 and the second sealing surface 32, enhancing the connection stability between the first housing 20 and the second housing 30. Bonding the first sealing surface 21 and the second sealing surface 32 with sealant 40 eliminates the need for additional connecting pieces to connect the first housing 20 and the second housing 30, reducing the steps in battery 100 assembly and saving costs.

In embodiments where both the first sealing surface 21 and the second sealing surface 32 are perpendicular to the first surface 31, the space formed between the first sealing surface 21 and the second sealing surface 32 may also be configured to accommodate sealing members such as a sealing gasket or a sealing ring. The sealing member is clamped between the first sealing surface 21 and the second sealing surface 32. The sealing member may be in abutment or adhesive bonding with the first sealing surface 21, and the sealing member may be in abutment or adhesive bonding with the second sealing surface 32.

In some embodiments, in projection along the second direction Y, a projection of the sealant 40 at least partially overlaps with a projection of the battery cell 10, the second direction Y being parallel to the first surface 31 and intersecting with the first side wall 23.

In embodiments where both the first sealing surface 21 and the second sealing surface 32 are perpendicular to the first surface 31, at least a portion of the sealant 40 between the first sealing surface 21 and the second sealing surface 32 may extend to a side of the battery cell 10 along the second direction Y, and in projection along the second direction Y, a projection of the portion of the sealant 40 extending to the side of the battery cell 10 in the second direction Y at least partially overlaps with the projection of the battery cell 10.

The sealant 40 may have a portion extending to the side of the battery cell 10 in the second direction Y, or the sealant 40 may be entirely located on a side of the battery cell 10 in the second direction Y.

In projection along the second direction Y, the projection of the sealant 40 at least partially overlapping with the projection of the battery cell 10 reduces the space occupied by the sealant 40 in other directions intersecting with the second direction Y, allowing the sealant 40 to fully utilize the space of the battery 100 in the second direction Y, thereby contributing to enhancing the energy density of the battery 100. Other directions intersecting with the second direction Y may be any direction intersecting with the second direction Y, such as the first direction X perpendicular to the second direction Y, or the third direction Z perpendicular to both the first direction X and the second direction Y.

In embodiments where both the first sealing surface 21 and the second sealing surface 32 are perpendicular to the first surface 31, as shown in FIG. 16 to FIG. 20, the battery 100 further includes a sealant blocking structure 50, the sealant blocking structure 50 being disposed in the closed space A at a position close to the first sealing surface 21 and the second sealing surface 32.

The sealant blocking structure 50 is configured to block the sealant 40 filled in the sealant accommodating space B defined by the first sealing surface 21 and the second sealing surface 32, reducing the risk of the sealant 40 in the sealant accommodating space B overflowing into the closed space A.

The sealant blocking structure 50 being disposed in the closed space A at a position close to the first sealing surface 21 and the second sealing surface 32 can be understood as the sealant blocking structure 50 being disposed at the junction between the closed space A and the sealant accommodating space B, or as the sealant blocking structure 50 being disposed at the boundary between the closed space A and the sealant accommodating space B.

The sealant blocking structure 50 being disposed in the closed space A at a position close to the first sealing surface 21 and the second sealing surface 32 allows the sealant blocking structure 50 to restrict the sealant 40 in the sealant accommodating space B from overflowing into the closed space A, reducing sealant waste and enabling the battery 100 to have good sealing performance, thereby contributing to improving the sealing reliability of the battery 100.

As shown in FIG. 16 to FIG. 20, in some embodiments, the sealant blocking structure 50 may be disposed on the first surface 31. The sealant blocking structure 50 being disposed on the first surface 31 facilitates the placement of the sealant blocking structure 50.

The sealant blocking structure 50 disposed on the first surface 31 may take various forms. As shown in FIG. 16 and FIG. 17, the sealant blocking structure 50 is a second protrusion 53 protruding from the first surface 31, and a portion of the first housing 20 is located between the second side wall 34 and the second protrusion 53.

The sealant blocking structure 50 may be a second protrusion 53 protruding from the first surface 31, and along the first direction X, at least a portion of the first housing 20 is located between the second side wall 34 and the second protrusion 53.

In embodiments where the first housing 20 includes a first end wall 22 and a first side wall 23, an end of the first side wall 23 away from the first end wall 22 is located between the second side wall 34 and the second protrusion 53. The second protrusion 53 is located on a side of the first side wall 23 away from the second side wall 34. The first protrusion 51 not only restricts the sealant 40 between the first sealing surface 21 and the second sealing surface 32 from overflowing into the closed space A but also restricts the first side wall 23 from deforming in a direction away from the first side wall 23. In this way, the initially set size of the closed space A is maintained substantially unchanged, reducing the risk of the first side wall 23 deforming in a direction away from the second side wall 34 and pressing against the battery cell 10. This can also reduce the risk of sealing failure of the sealant 40 between the first sealing surface 21 and the second sealing surface 32 due to the gradual increase in the sealant accommodating space B between the first sealing surface 21 and the second sealing surface 32 caused by the deformation of the first side wall 23 in a direction away from the second side wall 34.

In embodiments where the first housing 20 includes two first side walls 23 and the second housing 30 includes two second housings 30, the first surface 31 may be provided with two first protrusions 51, the two first protrusions 51 being respectively disposed close to the two second side walls 34, and the two first side walls 23 are respectively inserted between the two first protrusions 51 and the two first side walls 23.

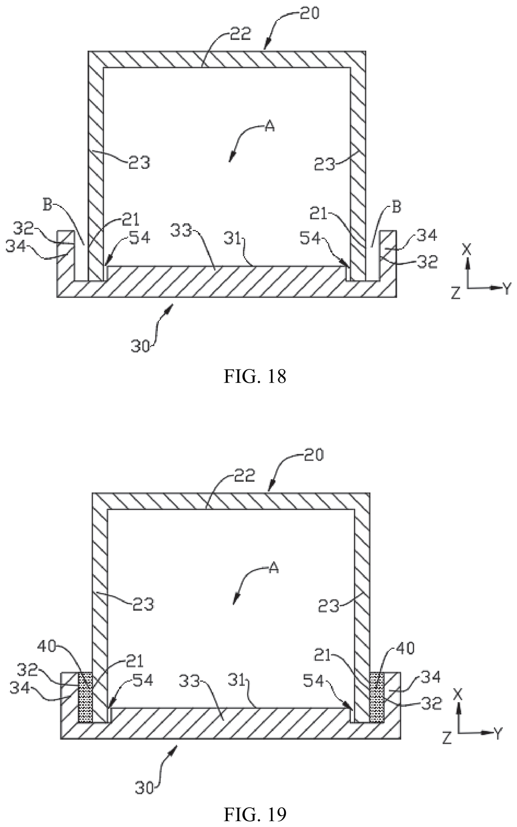

As shown in FIG. 18 to FIG. 21, in some embodiments, the first housing 20 includes a first end wall 22 and a first side wall 23 connected to each other, the first sealing surface 21 being disposed on the first side wall 23; and the second housing 30 includes a second end wall 33, the second end wall 33 being provided with an accommodating groove 54, where the second sealing surface 32 is disposed on a wall of the accommodating groove 54, the first side wall 23 is inserted into the accommodating groove 54, and the accommodating groove 54 is filled with sealant 40.

The first surface 31 of the second end wall 33 is formed with an accommodating groove 54, and the accommodating groove 54 may be recessed from the first surface 31 in a direction away from the first end wall 22. The accommodating groove 54 extends to the second side wall 34, and at least a portion of the surface of the second side wall 34 facing the closed space A serves both as the second sealing surface 32 and as a wall surface of the accommodating groove 54. A wall surface of the accommodating groove 54 arranged opposite to the second side wall 34 forms the sealant blocking structure 50, or the accommodating groove 54 may be regarded as a sealant accommodating space.

A portion of the first housing 20 is inserted into the accommodating groove 54. In embodiments where the first housing 20 includes a first end wall 22 and a first side wall 23, an end of the first side wall 23 away from the first end wall 22 is inserted into the accommodating groove 54. The sealant 40 between the first sealing surface 21 and the second sealing surface 32 is at least partially located in the accommodating groove 54.

In some embodiments, as shown in FIG. 18 and FIG. 19, the thickness of the second end wall 33 at the position corresponding to the accommodating groove 54 is less than the thickness of the second end wall 33 at other positions. Such an accommodating groove 54 may be formed by thinning a portion of the second end wall 33 or by integral molding methods such as casting or injection molding.

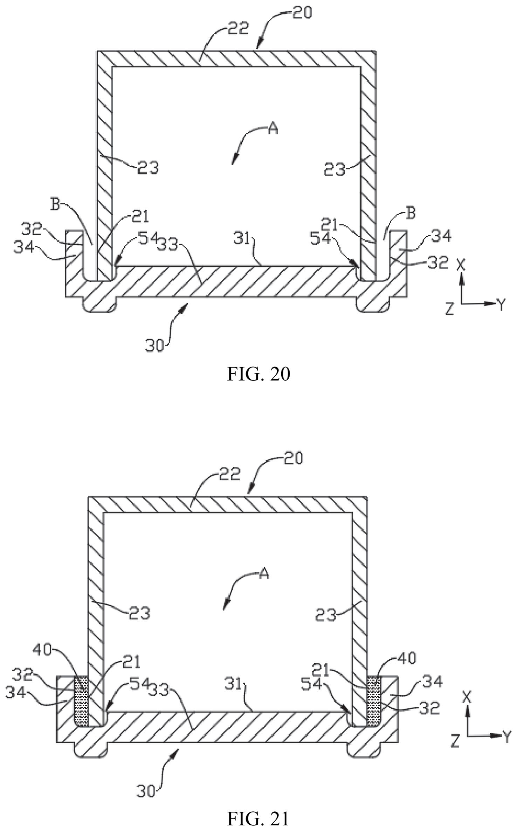

In some other embodiments, as shown in FIG. 19 and FIG. 20, the accommodating groove 54 is recessed from the first surface 31 in a direction away from the first end wall 22, and the surface of the second end wall 33 facing away from the first surface 31 protrudes in a direction away from the first end wall 22 at a position corresponding to the accommodating groove 54, so that the thickness of the second end wall 33 at the position corresponding to the accommodating groove 54 is consistent with the thickness of the second end wall 33 at other positions, thereby ensuring good structural strength of the second end wall 33. Such an accommodating groove 54 may be formed by methods such as stamping or bending.

The first side wall 23 being inserted into the accommodating groove 54 not only provides a limiting effect on the first side wall 23 but also restricts the first side wall 23 from deforming toward or away from the closed space A. The accommodating groove 54 being filled with sealant 40 not only improves sealing performance but also enables the sealant 40 to connect the first housing 20 and the second housing 30 within the accommodating groove 54, eliminating the need for additional connecting pieces to connect the first housing 20 and the second housing 30, reducing the steps in battery 100 assembly and saving costs.

In embodiments where the sealant blocking structure 50 is disposed on the first surface 31, the second side wall 34 of the second housing 30 may be configured as a low side wall structure, meaning that the dimension of the second side wall 34 of the second housing 30 in the first direction X is smaller, reducing the space occupied by the second side wall 34 in the first direction X.

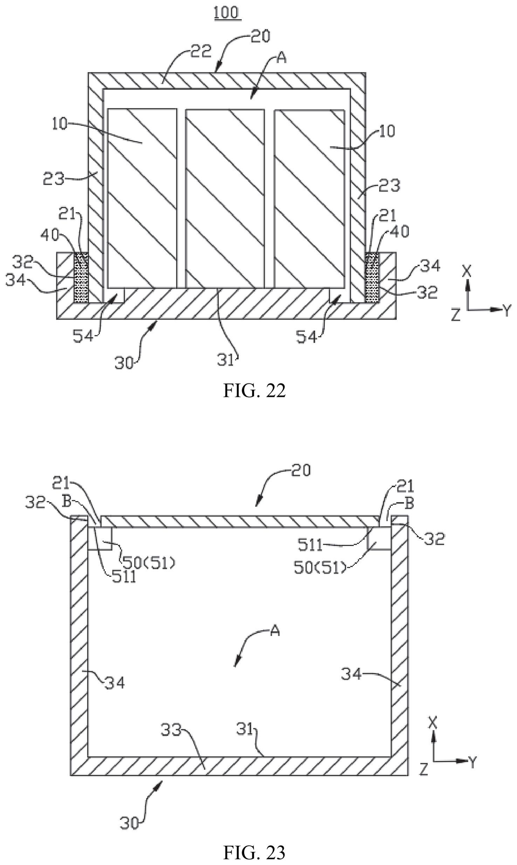

As shown in FIG. 22, in some embodiments, in projection along the first direction X, a projection of the accommodating groove 54 at least partially overlaps with the projection of the battery cell 10.

Along the second direction Y, at least a portion of the battery cell 10 extends to the opening of the accommodating groove 54. In embodiments where two accommodating grooves 54 are disposed at two ends of the second end wall 33 arranged oppositely along the second direction Y, the battery cell 10 extends along the second direction Y to the opening of the accommodating groove 54, and in projection along the first direction X, a portion of the projection of the battery cell 10 is located within the accommodating groove 54.

In projection along the first direction X, the projection of the accommodating groove 54 at least partially overlapping with the projection of the battery cell 10 allows the battery cell 10 to fully utilize the closed space A, thereby enhancing the energy density of the battery cell 10. The battery cell 10 can also prevent the sealant 40 in the accommodating groove 54 from overflowing into the closed space A.

As shown in FIG. 2, in some embodiments, the first housing 20 further includes two third side walls 24, where the two third side walls 24 are respectively connected to two ends of the first end wall 22 along a third direction Z, and the two first side walls 23 and the two third side walls 24 together form the side walls of the first housing 20, thereby making the first housing 20 a hollow structure with an opening on one side forming an accommodating cavity for accommodating the battery cell 10.

In some embodiments, the second housing 30 further includes two fourth side walls 35, where the two fourth side walls 35 are respectively connected to two ends of the second end wall 33 along the third direction Z, and the two fourth side walls 35 and the two second side walls 34 together form the side walls of the second housing 30, thereby making the second housing 30 a hollow structure with an opening on one side forming an accommodating cavity for accommodating the battery cell 10.

The third direction Z, the second direction Y, and the first direction X are perpendicular to each other. The third direction Z may be the length direction of the battery 100, and when the battery 100 is used in a heavy truck, the third direction Z may be substantially consistent with the length direction of the heavy truck.

The third side walls 24 and the second side walls 34 are arranged in a one-to-one correspondence, and the third side walls 24 are located on the inner side of the fourth side walls 35.

The third side wall 24 is provided with a third sealing surface (not shown in the figures), and the fourth side wall 35 is provided with a fourth sealing surface (not shown in the figures), the third sealing surface and the fourth sealing surface cooperating to seal the closed space A. The third sealing surface may intersect with the first surface 31, and the fourth sealing surface may intersect with the first surface 31, to reduce the space occupied by the third sealing surface and the fourth sealing surface in the third direction Z. A sealing space for accommodating sealant 40 may also be formed between the third sealing surface and the fourth sealing surface, and the sealant 40 can bond the third sealing surface and the fourth sealing surface, thereby achieving connection between the first housing 20 and the second housing 30, eliminating the need for additional connecting pieces at positions corresponding to the third sealing surface and the fourth sealing surface to connect the first housing 20 and the second housing 30, which facilitates simplifying the assembly steps of the battery 100 and saving costs.

Of course, the third sealing surface and the fourth sealing surface may also be parallel to the first surface 31.

As shown in FIG. 23, the first housing 20 may be a plate-like structure, and the second housing 30 may be a hollow structure with an opening on one side to form an accommodating cavity for accommodating the battery cell 10. The first housing 20 forms first sealing surfaces 21 at two end surfaces oppositely arranged along the second direction Y with respect to the two second side walls 34, respectively. A sealant accommodating space B for accommodating sealant 40 may be formed between the first sealing surface 21 and the second sealing surface 32. The surface of the first housing 20 facing away from the first surface 31 and the end surface of the second side wall 34 facing away from the second end wall 33 may be coplanar.

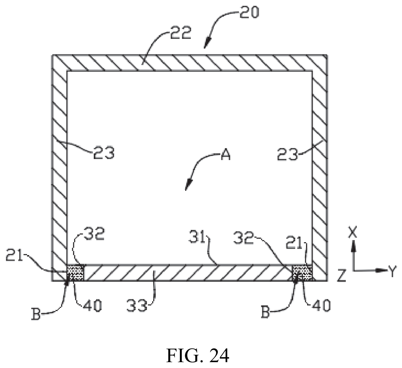

As shown in FIG. 24, the second housing 30 may be a plate-like structure, and the first housing 20 may be a hollow structure with an opening on one side to form an accommodating cavity for accommodating the battery cell 10. The second housing 30 forms second sealing surfaces 32 at two end surfaces oppositely arranged along the second direction Y with respect to the two first side walls 23, respectively. A sealant accommodating space B for accommodating sealant 40 may be formed between the first sealing surface 21 and the second sealing surface 32. The surface of the second housing 30 facing away from the first surface 31 and the end surface of the first side wall 23 facing away from the first end wall 22 may be coplanar.

Embodiments of the present application further provide an electric device, the electric device including the battery 100 provided in any of the above embodiments.

The electric device employs the battery 100 with relatively high energy density provided above, thus having relatively long endurance and meeting more power demands.

Embodiments of the present application provide a battery 100, the battery 100 including a battery cell 10, a first housing 20, and a second housing 30. The battery cell 10 is accommodated in a closed space A defined by the first housing 20 and the second housing 30. The first housing 20 includes a first end wall 22 and a first side wall 23, where both ends of the first end wall 22 along the second direction Y are connected to first side walls 23, both first side walls 23 are arranged at an obtuse angle with the first end wall 22, and the two first side walls 23 are arranged in a splayed configuration. The second housing 30 includes a second end wall 33 and a second side wall 34, where the second end wall 33 and the first end wall 22 are arranged oppositely along the first direction X, both ends of the second end wall 33 along the second direction Y are connected to second side walls 34, and both second side walls 34 are arranged perpendicularly to the second end wall 33. Dimensions of the two second side walls 34 along the first direction X are greater than dimensions of the first side walls 23 along the first direction X, and the second housing 30 is a high side wall structure. The first side wall 23 is located on a side of the second side wall 34 close to the closed space A, a portion of the surface of the first side wall 23 facing away from the closed space A forms the first sealing surface 21, a portion of the surface of the second side wall 34 facing the closed space A forms the second sealing surface 32, and an accommodating space for accommodating sealant 40 is formed between the first sealing surface 21 and the second sealing surface 32. The surface of the second end wall 33 facing the closed space A is the first surface 31, and the first surface 31 supports the battery cell 10. The first inner surfaces of both second side walls 34 are provided with a first protrusion 51 protruding therefrom, and the two first side walls 23 of the first housing 20, at one end away from the first end wall 22, are supported respectively on the first abutting surfaces 511 of the two first protrusions 51 facing away from the second end wall 33. Alternatively, the first inner surfaces of both second side walls 34 are both provided with a groove 52, the groove 52 extending to an end of the second side wall 34 away from the second end wall 33. The two first side walls 23 of the first housing 20, at one end away from the first end wall 22, are respectively inserted into the two grooves 52 and abut against the wall surfaces of the grooves 52.

Embodiments of the present application provide a battery 100, the battery 100 including a battery cell 10, a first housing 20, and a second housing 30. The battery cell 10 is accommodated in a closed space A defined by the first housing 20 and the second housing 30. The first housing 20 includes a first end wall 22 and a first side wall 23, where both ends of the first end wall 22 along the second direction Y are connected to first side walls 23, and both first side walls 23 are arranged perpendicularly to the first end wall 22. The second housing 30 includes a second end wall 33 and a second side wall 34, where the second end wall 33 and the first end wall 22 are arranged oppositely along the first direction X, both ends of the second end wall 33 along the second direction Y are connected to second side walls 34, and both second side walls 34 are arranged perpendicularly to the second end wall 33. Dimensions of the two second side walls 34 along the first direction X are less than dimensions of the first side walls 23 along the first direction X, and the second housing 30 is a low side wall structure. The first side wall 23 is located on a side of the second side wall 34 close to the closed space A, a portion of the surface of the first side wall 23 facing away from the closed space A forms the first sealing surface 21, a portion of the surface of the second side wall 34 facing the closed space A forms the second sealing surface 32, and an accommodating space for accommodating sealant 40 is formed between the first sealing surface 21 and the second sealing surface 32. The surface of the second end wall 33 facing the closed space A is the first surface 31, and the first surface 31 supports the battery cell 10. The first surface 31 is provided with two second protrusions 53 protruding therefrom, where the two second protrusions 53 are arranged spaced apart along the second direction Y, and the second protrusions 53 serve as the sealant blocking structure 50. The two first side walls 23 of the first housing 20, at one end away from the first end wall 22, are respectively inserted between the two second protrusions 53 and the two second side walls 34.

The above are only preferred embodiments of the present application and are not intended to limit the present application. For those skilled in the art, the present application may have various modifications and variations. Any modification, equivalent replacement, and improvement made without departing from the spirit and principle of the present application shall fall within the protection scope of the present application.

## Claims

1. A battery comprising:
a battery cell;
a first housing comprising a first sealing surface;
a second housing comprising a first surface and a second sealing surface, the first surface being configured to support the battery cell; wherein
the first housing and the second housing jointly enclose a closed space for accommodating the battery cell, the first sealing surface cooperates with the second sealing surface to seal the closed space; and
the first sealing surface intersects with the first surface, and the second sealing surface intersects with the first surface.

2. The battery according to claim 1, wherein at least one of the first sealing surface and the second sealing surface is perpendicular to the first surface.

3. The battery according to claim 1 or 2, wherein one of the first sealing surface and the second sealing surface is perpendicular to the first surface, and the other of the first sealing surface and the second sealing surface intersects non-perpendicularly with the first surface.

4. The battery according to claim 3, wherein the one of the first sealing surface and the second sealing surface, that is perpendicular to the first surface, is located on a side of the other away from the closed space.

5. The battery according to claim 4, wherein the second sealing surface is perpendicular to the first surface, and the second sealing surface is located on a side of the first sealing surface away from the closed space.

6. The battery according to any one of claims 3 to 5, wherein the first housing comprises a first end wall and a first side wall connected to each other, the first sealing surface being disposed on the first side wall; and
the second housing comprises a second end wall and a second side wall connected to each other, wherein the second end wall has the first surface and is disposed opposite to the first end wall along a first direction, the first direction being perpendicular to the first surface, and the second sealing surface is disposed on the second side wall.

7. The battery according to claim 6, wherein the first sealing surface intersects non-perpendicularly with the first surface, and the first side wall and the first end wall are connected at an obtuse angle; or the second sealing surface intersects non-perpendicularly with the first surface, and the second side wall and the second end wall are connected at an obtuse angle.

8. The battery according to claim 7, wherein the first sealing surface and the second sealing surface together form a sealant accommodating space for accommodating sealant.

9. The battery according to claim 8, wherein when projected along the first direction, a projection of the sealant accommodating space at least partially overlaps with a projection of the battery cell.

10. The battery according to claim 8, wherein the battery further comprises a sealant blocking structure, the sealant blocking structure being disposed at the junction between the closed space and the sealant accommodating space.

11. The battery according to claim 10, wherein the sealant blocking structure is disposed on the second side wall.

12. The battery according to claim 11, wherein the sealant blocking structure is a first protrusion protruding from an inner surface of the second side wall, and the first housing is supported on the first protrusion.

13. The battery according to claim 11, wherein the sealant blocking structure is a groove disposed on the inner surface of the second side wall, and a portion of the first housing is located within the groove.

14. The battery according to claim 6, wherein the second side wall is bent from an end of the second end wall along the first direction toward a direction away from the battery cell to form a recess, and the first side wall is inserted into the recess; or the first side wall is bent from an end of the first end wall along the first direction toward a direction away from the battery cell to form a recess, and the second side wall is inserted into the recess; and
the recess is configured to accommodate sealant.

15. The battery according to claim 14, wherein when projected along the first direction, a projection of the recess at least partially overlaps with the projection of the battery cell.

16. The battery according to claim 1 or 2, wherein both the first sealing surface and the second sealing surface are perpendicular to the first surface.

17. The battery according to claim 16, wherein the first housing comprises a first end wall and a first side wall connected to each other, the first sealing surface being disposed on the first side wall; and
the second housing comprises a second end wall and a second side wall connected to each other, wherein the second end wall has the first surface and is disposed opposite to the first end wall along a first direction, the first direction being perpendicular to the first surface, and the second sealing surface is disposed on the second side wall.

18. The battery according to claim 17, wherein sealant is filled between the first sealing surface and the second sealing surface.

19. The battery according to claim 18, wherein when projected along a second direction, the projection of the sealant at least partially overlaps with the projection of the battery cell, the second direction being parallel to the first surface and intersecting with the first side wall.

20. The battery according to claim 18, wherein the battery further comprises a sealant blocking structure, the sealant blocking structure being disposed in the closed space at a position close to the first sealing surface and the second sealing surface.

21. The battery according to claim 20, wherein the sealant blocking structure is disposed on the first surface.

22. The battery according to claim 20, wherein the sealant blocking structure is a second protrusion protruding from the first surface, and a portion of the first housing is located between the second side wall and the second protrusion.

23. The battery according to claim 1 or 2, wherein the first housing comprises a first end wall and a first side wall connected to each other, the first sealing surface being disposed on the first side wall, and the second housing comprises a second end wall, wherein the first end wall and the second end wall are disposed opposite each other along a first direction, the first direction being perpendicular to the first surface; and
the second end wall is provided with an accommodating groove, wherein the second sealing surface is disposed on a wall of the accommodating groove, the first side wall is inserted into the accommodating groove, and the accommodating groove is filled with sealant.

24. The battery according to claim 23, wherein when projected along the first direction, a projection of the accommodating groove at least partially overlaps with the projection of the battery cell.

25. An electric device comprising the battery according to any one of claims 1 to 24.
